# EUROPEAN PATENT APPLICATION

(11) **EP 4 733 357 A1**
(43) Date of publication of application: **29.04.2026**
(21) Application number: 24825861.8
(22) Date of filing: 17.06.2024
(51) Int. Cl.: C08L 33/12, C08F 290/04, C08L 51/04, C08L 51/06

(54) **RESIN COMPOSITION, MOLDING MATERIAL, AND MOLDED BODY**

(30) Priority: 21.06.2023 JP 2023101504; 21.06.2023 JP 2023101505
(71) Applicant: Mitsubishi Chemical Corporation, Tokyo 100-8251 (JP)
(72) Inventor: OTANI, Go, Tokyo 100-8251 (JP)
(74) Representative: Ter Meer Steinmeister & Partner
(86) International application number: PCT/JP2024/021885
(87) International publication number: WO 2024/262460

(57) **Abstract**

A resin composition containing a (meth)acrylic polymer (A), a (meth)acrylic copolymer (B), and a rubbery graft polymer (C) having a crosslinked structure and/or a (meth)acrylic polymer (D), wherein the (meth)acrylic polymer (A) is a random copolymer and/or a homopolymer, and contains 50 mass% or more of a repeating unit derived from methyl methacrylate, the (meth)acrylic copolymer (B) is a block copolymer and/or a graft copolymer, and the (meth)acrylic polymer (D) is a random copolymer and/or a homopolymer, contains 50 mass% or more of a repeating unit derived from methyl methacrylate and has a mass-average molecular weight of 500000 or more.

## Description

### Technical Field

The present disclosure relates to a resin composition, a molding material including the resin composition, and a molded body using the molding material.

### Background Art

Acrylic resins are excellent in transparency, weather resistance, high elastic modulus, surface hardness, and the like, and thus are widely used for front plates for displays such as liquid crystal displays and organic EL displays, signboard articles, lighting articles, toys, containers, household electrical appliances, vehicle components such as vehicle interior and exterior parts, medical members, industrial materials, building materials, lenses, light guide plates, light condensing members, optical members such as optical films used for displays such as liquid crystal displays and organic EL displays, and the like.

It is required to impart flexibility, toughness, and impact resistance to an acrylic resin product in some of these applications. In addition, there is a demand for an acrylic resin having excellent melt moldability that can be molded into a thin shape or a complicated shape using a melt molding method such as injection molding or extrusion molding.

As a technique for improving the impact resistance of an acrylic resin, for example, Patent Document 1 discloses a resin composition in which a rubber (core-shell rubber) having a core-shell structure having a core portion made of a crosslinked rubber and a shell portion that ensures compatibility and dispersibility with a (meth)acrylic polymer serving as a matrix is blended in a (meth)acrylic resin.

However, the resin composition described in Patent Document 1, containing the core-shell rubber, tends to have an increased melt viscosity and degraded melt moldability. Thus, unfortunately, the application of the resin composition is limited to a resin product having a large thickness or a resin product having a simple shape.

As a technique for improving the melt moldability of an acrylic resin, a resin composition is known, in which a block copolymer and/or a graft copolymer is blended in a (meth)acrylic resin. In the block copolymer and/or the graft copolymer, two or more polymer segments are linked to each other by a chemical bond. Thus, the phase separation structure of the resin composition in which the block copolymer and/or the graft copolymer having a poly (meth)acrylate chain is blended in an acrylic resin has a nanometer size (referred to as "microphase separation structure"). Therefore, in such a resin composition and a molded body produced by molding the resin composition, both the properties of the acrylic resin as a matrix and the properties of the block copolymer and/or the graft copolymer can be exhibited. Further, the properties of the polymer segment of each of the block copolymer and/or the graft copolymer can be exhibited.

The resin composition produced by blending the block copolymer and/or the graft copolymer in an acrylic resin forms a microphase separation structure. Thus, it is known that the molded body produced by molding the resin composition can favorably maintain the transparency of the acrylic resin, and is excellent in the properties (for example, flexibility and impact resistance) of each polymer segment of the block copolymer and/or the graft copolymer.

As a technique for improving the impact resistance of an acrylic resin using a block copolymer, for example, Patent Document 2 describes producing a block copolymer by a method of performing controlled radical polymerization in the presence of a nitroxide. Specifically, a technique is disclosed in which a sheet-shaped molded body containing a block copolymer is produced by a method for manufacturing a cast sheet by putting a syrup in a mold and polymerizing the syrup. Patent Document 2 describes that the resulting sheet-shaped molded body contains a (meth)acrylic polymer and a block copolymer having a polymethyl methacrylate chain and an n-butyl acrylate/styrene copolymer chain, and is excellent in impact resistance and transparency.

As a method for manufacturing the block copolymer and/or the graft copolymer described above, a method is known in which an acrylic macromonomer (hereinafter, referred to as "macromonomer") is manufactured in advance using a very small amount of a cobalt complex having an extremely high chain transfer constant, and the macromonomer and another monomer are copolymerized to manufacture the block copolymer and/or the graft copolymer. As a method for manufacturing an acrylic macromonomer using a cobalt complex, a catalytic chain transfer polymerization (CCTP) method is known. The macromonomer is a high-molecular compound having a polymerizable functional group in the molecular structure, and may be referred to as a macromer.

Patent Document 3 discloses a technique of manufacturing a macromonomer through CCTP, then manufacturing a macromonomer copolymer using the resulting macromonomer, and then adding the resulting macromonomer copolymer to an acrylic resin to achieve both impact resistance and transparency.

### Citation List

### Patent Literature

Patent Document 1: JP S62-21804 A
Patent Document 2: JP 2008-274290 A
Patent Document 3: JP 2022-065185 A

### Summary

### Technical Problem

In the method described in Patent Document 3, a molded body having favorable impact resistance is produced with a molding material that can be melt-molded and has excellent moldability. However, unfortunately, the toughness is low, and the impact resistance value is not sufficient in a notched Charpy impact test.

A first embodiment of the present disclosure solves the above-described issues of the known technology, and an object thereof is to provide a resin composition, a molding material, and a molded body having excellent toughness and impact resistance while maintaining excellent moldability in an acrylic resin molding material containing a block copolymer and/or a graft copolymer.

In the method described in Patent Document 2, synthesis of a block copolymer, synthesis of a (meth)acrylic polymer serving as a matrix, and manufacturing of a molded body are simultaneously performed. Thus, unfortunately, the method is not suitable for a melt molding method, and the material cannot be molded into a thin film shape or a complicated shape.

In the method described in Patent Document 3, a molded body having favorable impact resistance is produced with a molding material that can be melt-molded. However, unfortunately, haze is relatively high and transparency is insufficient.

A second embodiment of the present disclosure solves the issues of the known technology, and an object thereof is to provide a resin composition and a molding material capable of producing a molded body having excellent moldability, excellent impact resistance, flexibility, and excellent transparency and appearance quality realized with low haze.

### Solution to Problem

The present inventor has found that the objects of the first and second embodiments can be achieved by combining and blending specific (meth)acrylic resins.

That is, the gist of the present disclosure is as follows.
[1] A resin composition containing:
   a (meth)acrylic polymer (A);
   a (meth)acrylic copolymer (B); and
   a rubbery graft polymer (C) having a crosslinked structure,
   wherein
   the (meth)acrylic polymer (A) is a random copolymer and/or a homopolymer,
   the (meth)acrylic polymer (A) contains 50 mass% or more of a repeating unit derived from methyl methacrylate,
   the (meth)acrylic copolymer (B) is a block copolymer and/or a graft copolymer containing a polymer (B1) and a polymer (B2),
   the polymer (B1) contains 50 mass% or more of a repeating unit derived from methyl methacrylate and has a glass transition temperature of 0°C or higher, and
   the polymer (B2) is a polymer having a glass transition temperature of lower than 0°C.
[2] The resin composition according to [1], wherein the resin composition contains 25 mass% or more of the (meth)acrylic copolymer (B) with respect to a total of 100 mass% of the resin composition.
[3] The resin composition according to [1] or [2], wherein the (meth)acrylic copolymer (B) has a mass-average molecular weight calibrated with polymethyl methacrylate of 300000 or more.
[4] The resin composition according to any one of [1] to [3], wherein the rubbery graft polymer (C) is a particulate rubber containing a core composed of a rubbery portion and a shell component, and the rubbery portion is a silicone-acrylic composite rubber.
[5] The resin composition according to any one of [1] to [4], further containing a (meth)acrylic polymer (D) that is a random copolymer and/or a homopolymer,
   wherein
   the (meth)acrylic polymer (A) contains 50 mass% or more of a repeating unit derived from methyl methacrylate and has a mass-average molecular weight of 50000 to 200000,
   the (meth)acrylic polymer (D) contains 50 mass% or more of a repeating unit derived from methyl methacrylate and has a mass-average molecular weight of 500000 or more, and
   the resin composition contains 0.2 to 15 mass% of the (meth)acrylic polymer (D) with respect to a total of 100 mass% of the resin composition.
[6] A resin composition containing:
   a (meth)acrylic polymer (A);
   a (meth)acrylic copolymer (B); and
   a (meth)acrylic polymer (D),
   wherein
   the (meth)acrylic polymer (A) and the (meth)acrylic polymer (D) are random copolymers and/or homopolymers,
   the (meth)acrylic polymer (A) contains 50 mass% or more of a repeating unit derived from methyl methacrylate and has a mass-average molecular weight of 50000 to 200000,
   the (meth)acrylic copolymer (B) is a block copolymer and/or a graft copolymer,
   the (meth)acrylic polymer (D) contains 50 mass% or more of a repeating unit derived from methyl methacrylate and has a mass-average molecular weight of 500000 or more, and
   the resin composition contains 0.2 to 15 mass% of the (meth)acrylic polymer (D) with respect to a total of 100 mass% of the resin composition.
[7] The resin composition according to [6], wherein
   the (meth)acrylic polymer (A) contains a (meth)acrylic polymer (A2) having a melt flow rate of 7.0 g/10 min or more as measured under conditions of 230°C and 37.3 N in accordance with JIS K7210 or ISO 1133, and
   the resin composition contains 3 to 15 mass% of the (meth)acrylic polymer (A2) with respect to a total of 100 mass% of the resin composition.
[8] The resin composition according to [6] or [7], wherein the (meth)acrylic copolymer (B) contains a polymer (B1) containing 50 mass% or more of a repeating unit derived from methyl methacrylate.
[9] The resin composition according to any one of [6] to [8], further containing a rubbery graft polymer (C) having a crosslinked structure.
[10] The resin composition according to any one of [1] to [9], wherein the (meth)acrylic copolymer (B) contains a constituent unit derived from a macromonomer (b1) represented by General Formula (1): 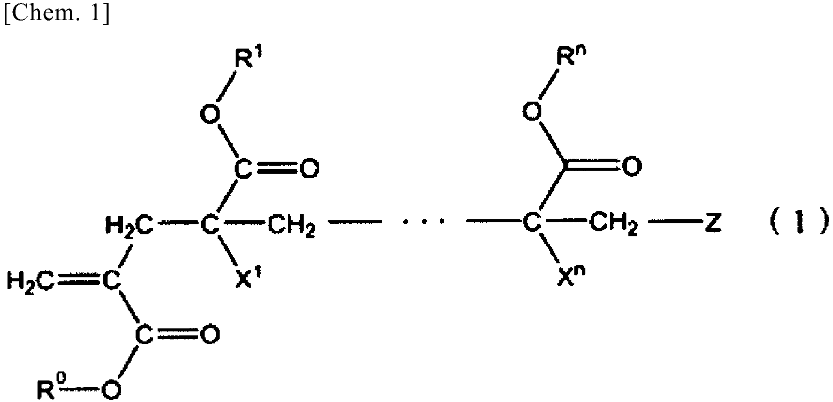 wherein
   R⁰ to Rⁿ are each independently a hydrogen atom, an alkyl group, a cycloalkyl group, an aryl group, or a heterocyclic group; X¹ to Xⁿ are each independently a hydrogen atom or a methyl group; Z is a terminal group; and n is a natural number of 1 to 10000.
[11] A molding material containing the resin composition described in any one of [1] to [10].
[12] The molding material according to [11], being a molding material for injection molding.
[13] A molded body using the molding material described in [11] or [12].
[14] A vehicle component including the molded body described in [13].
[15] A vehicle exterior component including the molded body described in [13].
[16] A home installation member including the molded body described in [13].
[17] An optical member including the molded body described in [13].
[18] A medical member including the molded body described in [13].
[19] A container including the molded body described in [13].
[20] The molding material according to [11], being a molding material for extrusion molding.
[21] A molded body including the molding material described in [11] or [20].
[22] A film including the molded body described in [21].
[23] An optical film including the molded body described in [21].
[24] An image display device including the molded body described in [21].
[25] A film for a home installation, the film including the molded body described in [21].
[26] A vehicle component including the molded body described in [21].
[27] A vehicle exterior component including the molded body described in [21].

### Advantageous Effects

The resin composition and the molding material of the first embodiment of the present disclosure are excellent in melt moldability, and a molded body produced by using and molding this molding material has excellent toughness and impact resistance.

The resin composition and the molding material of the second embodiment of the present disclosure are excellent in melt moldability, and a molded body produced by using and molding the molding material has excellent impact resistance, flexibility, and excellent transparency and appearance quality realized with low haze.

### Description of Embodiments

An embodiment for carrying out the present disclosure will now be described. The present disclosure is not limited to the following description. Various modifications can be made within the scope of the gist of the present disclosure.

In the present disclosure, "(meth)acryl" means one or both of "acryl" and "methacryl". "(Meth)acrylate" means one or both of "methacrylate" and "acrylate". The same applies to the term "(meth)acryloyl".

In the present disclosure, "monomer" means an unpolymerized compound (monomer component before polymerization). "Repeating unit" and "structural unit" each mean a constituent unit constituting a polymer derived from a monomer formed through polymerization of the monomer.

The constituent unit constituting a polymer is referred to as "monomer unit".

"Repeating unit" or "structural unit" may be a unit directly formed through a polymerization reaction, or may be a unit a part of which is converted into another structure by treating a polymer.

In the present disclosure, "mass%" refers to the content of a specific component contained in the total amount of 100 mass%.

In the present disclosure, unless otherwise noted, a numerical range represented by "(from) ... to ..." in the present description means a range including the numerical values written before and after "to" as the lower limit value and the upper limit value, respectively. That is, "(from) A to B" means A or more and B or less.

In the present disclosure, the mass-average molecular weight (Mw) of a (meth)acrylic polymer (A), a (meth)acrylic polymer (D), and additional (meth)acrylic polymers means a mass-average molecular weight that is a relative molecular weight determined using gel permeation chromatography (GPC) and calibrated with polystyrene. The mass-average molecular weight (Mw) of a (meth)acrylic copolymer (B) means a mass-average molecular weight that is a relative molecular weight determined using gel permeation chromatography (GPC) and calibrated with polymethyl methacrylate (PMMA).

### Resin Composition

The resin composition of the first embodiment of the present disclosure contains, as essential components, a (meth)acrylic polymer (A), a (meth)acrylic copolymer (B), and a rubbery graft polymer (C) having a crosslinked structure.

The resin composition of the first embodiment can contain a (meth)acrylic polymer (D) and additional components as necessary.

The resin composition of the second embodiment of the present disclosure contains, as essential components, a (meth)acrylic polymer (A), a (meth)acrylic copolymer (B), and a (meth)acrylic polymer (D). The (meth)acrylic polymer (A) may contain a (meth)acrylic polymer (A2) as necessary.

The resin composition of the second embodiment can contain the rubbery graft polymer (C) having a crosslinked structure and additional components as necessary.

Hereinafter, the "first embodiment " and the "second embodiment " are collectively referred to as the "present embodiment".

### (Meth)Acrylic Polymer (A)

The (meth)acrylic polymer (A) is one of the constituent components of the resin composition of the present disclosure.

The (meth)acrylic polymer (A) is a random copolymer and/or a homopolymer including 50 mass% or more of a repeating unit derived from methyl methacrylate (hereinafter, it may be referred to as "methyl methacrylate unit") with respect to a total mass of 100 mass% of the (meth)acrylic polymer (A).

The methyl methacrylate unit is contained in an amount of 50 mass% or more, preferably 80 mass% or more, preferably 90 mass% or more, and preferably 95 mass% or more with respect to a total mass of 100 mass% of the (meth)acrylic polymer (A).

When the lower limit of the content proportion of the methyl methacrylate unit in the (meth)acrylic polymer (A) is 50 mass% or more with respect to a total mass of 100 mass% of the (meth)acrylic polymer (A), the heat resistance, hardness, scratch resistance, weather resistance, transparency, and processability of the (meth)acrylic resin can be favorably maintained.

On the other hand, the upper limit of the content proportion of the methyl methacrylate unit is not particularly limited, and the (meth)acrylic polymer (A) may be a homopolymer of methyl methacrylate (the content proportion of the methyl methacrylate unit is 100 mass%).

The (meth)acrylic polymer (A) may contain, in addition to the repeating unit derived from methyl methacrylate, a unit derived from another comonomer copolymerizable with methyl methacrylate (hereinafter, it may be referred to as "comonomer unit") depending on the purpose.

For example, containing, by the (meth)acrylic polymer (A), a repeating unit derived from acrylate (hereinafter, it may be referred to as "acrylate unit") as a comonomer unit can suppress depolymerization of the (meth)acrylic polymer (A) when the polymer is exposed to a high temperature condition such as melt molding and improve thermal decomposition resistance.

By adjusting the type and content of the comonomer unit, functions such as the glass transition temperature (Tg), processability, heat resistance, refractive index, weather resistance, releasability, and thermal decomposition resistance of the (meth)acrylic polymer (A) can be controlled.

The upper limit of the content proportion of the comonomer unit in the (meth)acrylic polymer (A) is preferably 20 mass% or less with respect to a total mass of 100 mass% of the (meth)acrylic polymer (A) because the performances of the (meth)acrylic polymer (A) such as heat resistance, hardness, scratch resistance, weather resistance, transparency, and processability can be favorably maintained.

On the other hand, the lower limit of the content proportion of the comonomer unit is not particularly limited. As described above, the (meth)acrylic polymer (A) does not have to contain the comonomer unit, that is, the (meth)acrylic polymer (A) may be a homopolymer of methyl methacrylate.

Examples of the comonomer forming the comonomer unit of the (meth)acrylic polymer (A) include the following a) to i):
a) (meth)acrylate ester monomers other than methyl methacrylate, such as methyl acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, n-lauryl (meth)acrylate, n-stearyl (meth)acrylate, cyclohexyl (meth)acrylate, phenyl (meth)acrylate, benzyl (meth)acrylate, isobornyl (meth)acrylate, 2-methoxyethyl (meth)acrylate, 2-ethoxyethyl (meth)acrylate, and phenoxyethyl (meth)acrylate;
b) hydroxy group-containing (meth)acrylate monomers such as 2-hydroxyethyl (meth)acrylate, 2-hydroxypropyl (meth)acrylate, 4-hydroxybutyl (meth)acrylate, and glycerol (meth)acrylate;
c) carboxyl group-containing vinyl-based monomers such as (meth)acrylic acid, 2-(meth)acryloyloxyethylhexahydrophthalic acid, 2-(meth)acryloyloxypropylhexahydrophthalic acid, 2-(meth)acryloyloxyethylphthalic acid, 2-(meth) acryloyloxypropylphthalic acid, 2-(meth)acryloyloxyethylmaleic acid, 2-(meth)acryloyloxypropylmaleic acid, 2-(meth)acryloyloxyethylsuccinic acid, 2-(meth)acryloyloxypropylsuccinic acid, crotonic acid, fumaric acid, maleic acid, itaconic acid, monomethyl maleate, and monomethyl itaconate;
d) acid anhydride group-containing vinyl-based monomers such as maleic anhydride and itaconic anhydride;
e) epoxy group-containing vinyl-based monomers such as glycidyl (meth)acrylate, glycidyl α-ethyl acrylate, and 3,4-epoxybutyl (meth)acrylate;
f) vinyl-based monomers based on amino group-containing (meth)acrylates such as dimethylaminoethyl (meth)acrylate and diethylaminoethyl (meth)acrylate;
g) vinyl-based monomers containing amide groups such as (meth)acrylamide, N-t-butyl (meth)acrylamide, N-methylol (meth)acrylamide, N-methoxymethyl (meth)acrylamide, N-butoxymethyl (meth)acrylamide, diacetone acrylamide, maleic acid amide, and maleimide;
h) vinyl-based monomers such as styrene, α-methylstyrene, vinyltoluene, (meth)acrylonitrile, vinyl chloride, vinyl acetate, and vinyl propionate; and
i) polyfunctional vinyl-based monomers such as divinylbenzene, ethylene glycol di(meth)acrylate, 1,3-butylene glycol di(meth)acrylate, 1,6-hexanediol di(meth)acrylate, triethylene glycol di(meth)acrylate, tetraethylene glycol di(meth)acrylate, tripropylene glycol di(meth)acrylate, trimethylolpropane tri(meth)acrylate, allyl (meth)acrylate, and N,N'-methylenebis(meth)acrylamide.

One of these may be used alone or two or more of these may be used in combination.

Among these, methyl acrylate, ethyl (meth)acrylate, n-butyl (meth)acrylate, and 2-ethylhexyl (meth)acrylate are preferable from the viewpoint of availability of the monomers. Further, methyl acrylate is more preferable from the viewpoint of securing rigidity and heat resistance of the resin composition and the molding material of the present disclosure and the molded body.

The mass-average molecular weight (Mw) of the (meth)acrylic polymer (A) calibrated with polystyrene in the first embodiment is 50000 or more and 200000 or less, preferably 70000 or more and 150000 or less, and preferably 80000 or more and 120000 or less.

The mass-average molecular weight (Mw) of the (meth)acrylic polymer (A) calibrated with polystyrene in the second embodiment is 50000 or more and 200000 or less, preferably 70000 or more and 150000 or less, and preferably 80000 or more and 120000 or less.

When the lower limit of Mw of the (meth)acrylic polymer (A) is 50000 or more, the performances such as heat resistance, hardness, scratch resistance, weather resistance, and transparency of the (meth)acrylic resin are likely to be exhibited. When the upper limit of Mw of the (meth)acrylic polymer (A) is 200000 or less, the melt viscosity falls within an appropriate range, and favorable melt-kneading properties and processability are achieved.

One type of the (meth)acrylic polymer (A) may be used alone, or two or more types thereof having different resin compositions, physical properties, or the like may be mixed and used.

The content proportion of the (meth)acrylic polymer (A) is preferably 25 mass% or more, preferably 30 mass% or more, and preferably 35 mass% or more with respect to a total of 100 mass% of the resin composition of the present disclosure. When the content proportion of the (meth)acrylic polymer (A) is 25 mass% or more, functions such as heat resistance, weather resistance, and transparency, which are characteristics of the (meth)acrylic resin, can be effectively imparted.

The content proportion of the (meth)acrylic polymer (A) is preferably 90 mass% or less, preferably 85 mass% or less, and preferably 80 mass% or less with respect to a total of 100 mass% of the resin composition of the present disclosure. When the content proportion of the (meth)acrylic polymer (A) is 90 mass% or less, the content proportion of the (meth)acrylic copolymer (B), the rubbery graft polymer (C) having a crosslinked structure, and/or the (meth)acrylic polymer (D) increases. Thus, a resin composition, a molding material, and a molded body having balanced moldability, toughness, and impact resistance, or flexibility, moldability, transparency, and the like are produced.

### (Meth)Acrylic Polymer (A2)

The (meth)acrylic polymer (A2) is used as a part of the (meth)acrylic polymer (A) in the resin composition of the second embodiment as necessary.

The (meth)acrylic polymer (A2) serves to adjust the fluidity during melt-molding. By using an appropriate amount of the (meth)acrylic polymer (A2) in the resin composition, the haze of a molded body manufactured by injection molding can be suppressed to a low level, molding defects can be prevented, and a favorable appearance quality can be imparted.

From the viewpoint of effectively achieving the above effect, the (meth)acrylic polymer (A2) preferably has a melt flow rate (MFR) of 7.0 g/10 min or more, preferably 10.0 g/10 min or more, and preferably 12.0 g/10 min or more as measured under the conditions of 230°C and 37.3 N in accordance with JIS K7210 or ISO 1133. The upper limit of the MFR of the (meth)acrylic polymer (A2) is not particularly limited, but is usually 30 g/10 min or less.

Like the (meth)acrylic polymer (A), the mass-average molecular weight (Mw) of the (meth)acrylic polymer (A2) calibrated with polystyrene is 50000 or more and 200000 or less, preferably 70000 or more and 150000 or less, and preferably 80000 or more and 120000 or less.

When the lower limit of Mw of the (meth)acrylic polymer (A2) is 50000 or more, the performances such as heat resistance, hardness, scratch resistance, weather resistance, and transparency of the (meth)acrylic resin are likely to be exhibited. When the upper limit of Mw of the (meth)acrylic polymer (A2) is 200000 or less, the melt viscosity falls within an appropriate range, and favorable melt-kneading properties and processability are achieved.

When the (meth)acrylic polymer (A2) includes a comonomer unit, the comonomer unit is the same as the comonomer unit contained in the (meth)acrylic polymer (A).

The amount of the comonomer unit contained in the (meth)acrylic polymer (A2) is preferably 2 mass% or more and 20 mass% or less, preferably 5 mass% or more and 18 mass% or less, and preferably 10 mass% or more and 15 mass% or less.

When the (meth)acrylic polymer (A2) contains 2 mass% or more of the comonomer unit, the above-described melt flow rate is likely to be achieved. When the (meth)acrylic polymer (A2) contains 20 mass% or less of the comonomer unit, the performances of the (meth)acrylic resin such as heat resistance, hardness, scratch resistance, weather resistance, and transparency are likely to be exhibited.

The content proportion of the (meth)acrylic polymer (A2) contained in the resin composition of the second embodiment is preferably 1 mass% or more and 20 mass% or less, preferably 2 mass% or more and 15 mass% or less, preferably 3 mass% or more and 15 mass% or less, and preferably 3 mass% or more and 12 mass% or less with respect to 100 mass% of the resin composition.

By setting the content proportion of the (meth)acrylic polymer (A2) to 1 mass% or more, the effects of suppressing the haze of the molded body and suppressing molding defects can be effectively achieved. By setting the content proportion of the (meth)acrylic polymer (A2) to 20 mass% or less, degradation of mechanical properties such as heat resistance and impact resistance of the resin composition can be prevented.

### (Meth)Acrylic Copolymer (B)

The resin composition of the present disclosure contains a (meth)acrylic copolymer (B).

The (meth)acrylic copolymer (B) is a block copolymer and/or a graft copolymer. That is, the (meth)acrylic copolymer (B) has at least one structure of a block copolymer and a graft copolymer.

The block and/or graft structure that is the structure of the (meth)acrylic copolymer (B) according to the present disclosure may be any structure such as diblock, triblock, multiblock, graft, cyclic, star-shaped, comb-shaped, dendritic, and ladder structures, or may be a structure in which a plurality of these structures are combined. Among these structures, it is preferable to include at least any one structure of diblock, triblock, or graft because excellent impact resistance and flexibility can be imparted, and manufacturing is relatively easy.

The (meth)acrylic copolymer (B) according to the first embodiment is a block copolymer and/or a graft copolymer containing a polymer (B1) and a polymer (B2). The polymer (B1) contains 50 mass% or more of a repeating unit derived from methyl methacrylate, and has a glass transition temperature of 0°C or higher. The polymer (B2) has a glass transition temperature of lower than 0°C.

In the first embodiment, the (meth)acrylic copolymer (B) preferably has a mass-average molecular weight calibrated with polymethyl methacrylate of 300000 or more.

The (meth)acrylic copolymer (B) according to the second embodiment preferably contains the polymer (B1) containing 50 mass% or more of a repeating unit derived from methyl methacrylate, and as with the first embodiment, it is particularly preferable to contain the polymer (B1) and the polymer (B2) described below.

In the (meth)acrylic copolymer (B) according to the present disclosure, the polymer (B1) has a function of imparting miscibility and compatibility with the (meth)acrylic polymer (A) and a function of enabling the (meth)acrylic copolymer (B) to be handled as a solid.

In the (meth)acrylic copolymer (B) according to the present disclosure, the polymer (B2) has a function of imparting flexibility, impact resistance, and moldability.

The (meth)acrylic copolymer (B) according to a preferred embodiment of the present disclosure contains the polymer (B1) and the polymer (B2) in the same polymer molecule. For example, the (meth)acrylic copolymer (B) may be a graft copolymer in which a main chain is composed of the polymer (B1), and a graft chain composed of the polymer (B2) is branched and linked to the main chain composed of the polymer (B1). Conversely, in the (meth)acrylic copolymer (B), the main chain may be the polymer (B2), and the side chain may be the polymer (B1). The (meth)acrylic copolymer (B) may be a block copolymer in which a polymer composed of the polymer (B1) and a polymer composed of the polymer (B2) are linked in series. Further, the graft copolymer may have a structure in which the main chain and/or side chain of the graft copolymer includes a block copolymer.

The content proportion of the (meth)acrylic copolymer (B) is preferably 25 mass% or more, preferably 30 mass% or more, and preferably 35 mass% or more with respect to a total of 100 mass% of the resin composition of the first embodiment. When the content proportion of the (meth)acrylic copolymer (B) is 25 mass% or more, fluidity and impact resistance, which are characteristics of the (meth)acrylic copolymer (B), are likely to be imparted to the resin composition.

The content proportion of the (meth)acrylic copolymer (B) is preferably 70 mass% or less, preferably 60 mass% or less, and preferably 50 mass% or less with respect to 100 mass% of the total of the resin composition of the first embodiment. When the content proportion of the (meth)acrylic copolymer (B) is 70 mass% or less, the content proportion of the (meth)acrylic polymer (A) and the rubbery graft polymer (C) having a crosslinked structure is secured, and the effects of these components are likely to be achieved. Thus, a resin composition, a molding material, and a molded body having balanced moldability, toughness, impact resistance, and the like are produced.

The content proportion of the (meth)acrylic copolymer (B) is preferably 10 mass% or more, preferably 20 mass% or more, and preferably 30 mass% or more with respect to a total of 100 mass% of the resin composition of the second embodiment. When the content proportion of the (meth)acrylic copolymer (B) is 10 mass% or more, fluidity and flexibility, which are characteristics of the (meth)acrylic copolymer (B), are likely to be imparted to the resin composition.

The content proportion of the (meth)acrylic copolymer (B) is preferably 70 mass% or less, preferably 60 mass% or less, and preferably 50 mass% or less with respect to a total of 100 mass% of the resin composition of the second embodiment. When the content proportion of the (meth)acrylic copolymer (B) is 70 mass% or less, the content proportion of the (meth)acrylic polymer (A) and the (meth)acrylic polymer (D) is secured, and the effects of these components are likely to be achieved. Thus, a resin composition, a molding material, and a molded body having balanced flexibility, moldability, transparency, and the like are produced.

The lower limit of the mass-average molecular weight (Mw) of the (meth)acrylic copolymer (B) according to the present disclosure is preferably 50000 or more, preferably 100000 or more, preferably 200000 or more, and preferably 300000 or more. When the mass-average molecular weight (Mw) of the (meth)acrylic copolymer (B) is 50000 or more, the resin composition, the molding material, and the molded body have favorable flexibility and impact resistance.

In particular, in the first embodiment, when the mass-average molecular weight (Mw) of the (meth)acrylic copolymer (B) is 300000 or more, impact resistance is more likely to be achieved. From this viewpoint, the mass-average molecular weight (Mw) of the (meth)acrylic copolymer (B) is preferably 500000 or more, and preferably 800000 or more.

The upper limit of the mass-average molecular weight (Mw) of the (meth)acrylic copolymer (B) according to the present disclosure is preferably 5000000 or less, preferably 3500000 or less, and preferably 2000000 or less. When the mass-average molecular weight (Mw) of the (meth)acrylic copolymer (B) is 5000000 or less, the resin composition, the molding material, and the molded body have favorable transparency.

In the present disclosure, the mass-average molecular weight (Mw) of the (meth)acrylic copolymer (B) means a mass-average molecular weight that is a relative molecular weight determined using gel permeation chromatography (GPC) and calibrated with polymethyl methacrylate (PMMA).

### Polymer (B1)

The polymer (B1) preferably contains 50 mass% or more of a methyl methacrylate unit. When a comonomer unit common to the (meth)acrylic polymer (A) is used in the polymer (B1), miscibility and compatibility with the (meth)acrylic polymer (A), which are functions of the polymer (B1), can be effectively exhibited.

The polymer (B1) preferably contains 50 mass% or more, preferably 80 mass% or more, preferably 90 mass% or more, and preferably 95 mass% or more of a methyl methacrylate unit with respect to a total mass of 100 mass% of the polymer.

When the lower limit of the content proportion of the methyl methacrylate unit in the polymer (B1) is 50 mass% or more with respect to a total mass of 100 mass% of the polymer (B1), the polymer (B1) has a favorable affinity for the (meth)acrylic polymer (A), and favorable miscibility and compatibility are achieved.

The upper limit of the content proportion of the methyl methacrylate unit is not particularly limited, and the polymer (B1) may be a homopolymer in which a content proportion of the methyl methacrylate unit is 100 mass%.

In addition to the methyl methacrylate unit, the polymer (B1) may contain a comonomer unit derived from another comonomer copolymerizable with methyl methacrylate according to the purpose.

For example, containing, by the polymer (B1), an acrylate unit as a comonomer unit can suppress depolymerization of the polymer (B1) when the polymer is exposed to a high temperature condition such as melt molding, thus improving the thermal decomposition resistance.

By adjusting the type and content of the comonomer unit, functions such as the glass transition temperature (Tg), processability, heat resistance, refractive index, weather resistance, releasability, and thermal decomposition resistance of the polymer (B1) can be controlled.

The upper limit of the content proportion of the comonomer unit in the polymer (B1) is preferably 50 mass% or less with respect to a total mass of 100 mass% of the polymer (B1) because the performances such as heat resistance, hardness, scratch resistance, weather resistance, transparency, and processability can be favorably maintained. On the other hand, the lower limit of the content proportion of the comonomer unit may be 0 mass%.

Examples of the comonomer forming the comonomer unit of the polymer (B1) include the comonomers a) to i) described above as the comonomer forming the comonomer unit of the (meth)acrylic polymer (A). One of these may be used alone, or two or more of these may be used in combination.

As the comonomer of the comonomer unit contained in the polymer (B1), from the viewpoint of availability of the monomers, methyl acrylate, ethyl (meth)acrylate, n-butyl (meth)acrylate, and 2-ethylhexyl (meth)acrylate are preferable, and methyl acrylate is more preferable.

The polymer (B1) preferably contains a constituent unit derived from a macromonomer (b1) described later. In this case, the methyl methacrylate unit may be contained in the macromonomer (b1).

In the first embodiment, the glass transition temperature (Tg) of the polymer (B1) is 0°C or higher, preferably 20°C or higher, preferably 40°C or higher, and preferably 60°C or higher. When the glass transition temperature (Tg) of the polymer (B1) is 0°C or higher, the (meth)acrylic copolymer (B) can be handled as a solid.

The upper limit of the glass transition temperature of the polymer (B1) is not particularly limited, but is preferably 120°C or lower, and preferably 110°C or lower, from the viewpoint that it is realizable with an easily available raw material.

In the second embodiment as well, the glass transition temperature (Tg) of the polymer (B1) is preferably in the preferable range described above for the same reason as described above.

In the present disclosure, the Tg of the polymer (B1) can be calculated by adopting a numerical value described in a known document such as POLYMER HANDBOOK FOURTH EDITION 2003 as the Tg of a homopolymer of a monomer which is a constituent unit of the polymer (B1) and using the Fox equation. Alternatively, the dynamic viscoelasticity of the resulting molded body can be measured, and the value of tanδ can be adopted as Tg.

The lower limit of the mass-average molecular weight (Mw) of the polymer (B1) in the present disclosure is preferably 3000 or more, preferably 10000 or more, preferably 15000 or more, and preferably 20000 or more. When the Mw of the polymer (B1) is 3000 or more, the polymer (B1) has a favorable affinity with the (meth)acrylic polymer (A), and miscibility and compatibility can be expected to be imparted.

The upper limit of the mass-average molecular weight (Mw) of the polymer (B1) in the present disclosure is preferably 1000000 or less, preferably 80000 or less, preferably 60000 or less, and preferably 40000 or less. When the Mw of the polymer (B1) is 1000000 or less, the melt viscosity falls within an appropriate range.

In the present disclosure, the mass-average molecular weight (Mw) of the polymer (B1) means a mass-average molecular weight that is a relative molecular weight determined using gel permeation chromatography (GPC) and calibrated with polymethyl methacrylate (PMMA).

The polymer (B1) in the present disclosure may be a mixture of two or more types of polymers. In such a case, the mass-average molecular weight (Mw) is calculated as a value of the polymer (B1) as a whole. When a plurality of types of polymers (B1) having different mass-average molecular weights (Mw) are used in combination, the polymer (B1) having a lower molecular weight plays a role of reducing the syrup viscosity and preventing the copolymer from being crosslinked, and the polymer (B1) having a larger molecular weight plays a role of securing compatibility with the matrix resin when used as an additive.

The content proportion of the polymer (B1) contained in the (meth)acrylic copolymer (B) is preferably 35 mass% or more and 75 mass% or less with respect to a total mass of 100 mass% of the (meth)acrylic copolymer (B).

When the lower limit of the content proportion of the polymer (B1) is 35 mass% or more, the (meth)acrylic copolymer (B) having excellent miscibility and compatibility with the (meth)acrylic polymer (A) is likely to be achieved. The lower limit of the content proportion of the polymer (B1) is preferably 40 mass% or more, preferably 45 mass% or more, and preferably 50 mass% or more.

On the other hand, when the upper limit of the content proportion of the polymer (B1) is 75 mass% or less, the effect of imparting moldability and flexibility by the polymer (B2) is likely to be achieved. The upper limit of the content proportion of the polymer (B1) is preferably 70 mass% or less, and preferably 65 mass% or less.

### Polymer (B2)

The polymer (B2) imparts functions such as flexibility, impact resistance, and improvement of fluidity during melt molding to the (meth)acrylic copolymer (B) and the resin composition, molding material, and molded body of the present disclosure using the copolymer.

The glass transition temperature (Tg) of the polymer (B2) is preferably 0°C or lower, preferably -10°C or lower, preferably -20°C or lower, and preferably -35°C or lower. When the glass transition temperature (Tg) of the polymer (B2) is 0°C or lower, effects such as flexibility, impact resistance, and improvement of fluidity during melt molding can be expected. The lower limit of the glass transition temperature (Tg) of the polymer (B2) is usually -60°C.

In the present disclosure, the Tg of the polymer (B2) can be calculated by adopting a numerical value described in a known document such as POLYMER HANDBOOK FOURTH EDITION 2003 as the Tg of a homopolymer of a monomer which is a constituent unit of the polymer (B2) and using the Fox equation. Alternatively, the dynamic viscoelasticity of the resulting molded body can be measured, and the value of tanδ can be adopted as Tg.

The content proportion of the polymer (B2) contained in the (meth)acrylic copolymer (B) is preferably 25 mass% or more and 65 mass% or less with respect to a total mass of 100 mass% of the (meth)acrylic copolymer (B).

When the lower limit of the content proportion of the polymer (B2) is 25 mass% or more, the effect of improving flexibility, impact resistance, and moldability by the (meth)acrylic copolymer (B) is likely to be achieved. The lower limit of the content proportion of the polymer (B2) is preferably 30 mass% or more, and preferably 35 mass% or more.

On the other hand, when the upper limit of the content proportion of the polymer (B2) is 65 mass% or less, the (meth)acrylic copolymer (B) has favorable handleability. The upper limit of the content proportion of the polymer (B2) is preferably 60 mass% or less, preferably 55 mass% or less, preferably 50 mass% or less, and preferably 45 mass% or less.

The refractive index of the polymer (B2) is preferably set such that the difference in refractive index between the polymer (B1) and the (meth)acrylic polymer (A) is small. This can lead to favorable transparency in the resin composition, the molding material, and the molded body of the present disclosure. The difference in refractive index between the polymer (B2) and the polymer (B1) is preferably 0.1 or less, preferably 0.05 or less, and preferably 0.02 or less. Similarly, the difference in refractive index between the polymer (B2) and the (meth)acrylic polymer (A) is preferably 0.1 or less, preferably 0.05 or less, and preferably 0.02 or less.

The mass-average molecular weight (Mw) of the polymer (B2) in the present disclosure is preferably 3000 or more, preferably 10000 or more, preferably 15000 or more, and preferably 20000 or more. When the Mw of the polymer (B2) is 3000 or more, favorable impact resistance is achieved.

The mass-average molecular weight (Mw) of the polymer (B2) in the present disclosure is preferably 2500000 or less, preferably 2000000 or less, preferably 1500000 or less, and preferably 1000000 or less. When the Mw of the polymer (B2) is 2500000 or less, the resin composition and the molding material of the present disclosure have favorable transparency.

In the present disclosure, the mass-average molecular weight (Mw) of the polymer (B2) means a mass-average molecular weight that is a relative molecular weight (Mw) determined using gel permeation chromatography (GPC) and calibrated with polymethyl methacrylate (PMMA).

### Monomer (b2)

The monomer (b2) is a monomer unit used as a raw material of the polymer (B2). The monomer (b2) is not particularly limited as long as the (meth)acrylic copolymer (B) can be manufactured, and various polymerizable monomers can be used as necessary. Specifically, it is preferable to mainly use acrylate or aromatic vinyl from the viewpoint of imparting flexibility, impact resistance, and moldability by setting the glass transition temperature (Tg) low and adjusting the refractive index. An additional monomer can be used as necessary.

The amount of the acrylate used for the monomer (b2) is preferably 70 mass% or more, preferably 79 mass% or more, and preferably 81 mass% or more with respect to a total mass of 100 mass% of the monomer (b2). When the lower limit of the content proportion of the acrylate is 70 mass% or more, the effect of improving flexibility, impact resistance, and moldability is given to the (meth)acrylic copolymer (B). On the other hand, when the content proportion of the acrylate is small, the effect of improving flexibility, impact resistance, and moldability may be insufficient.

The upper limit of the content proportion of the acrylate contained in the monomer (b2) is not particularly limited, but is preferably less than 100 mass%, preferably 95 mass% or less, and preferably 90 mass% or less with respect to a total mass of 100 mass% of the monomer (b2).

The glass transition temperature (Tg) of the homopolymer of the acrylate is preferably lower than 0°C because the impact resistance of the resulting molded body can be further improved.

In the present disclosure, the Tg of the homopolymer of the acrylate can be calculated by adopting a numerical value described in a known document such as POLYMER HANDBOOK FOURTH EDITION 2003 and using the Fox equation.

Examples of the acrylate used for the monomer (b2) include acrylates such as methyl acrylate, ethyl acrylate, n-propyl acrylate, i-propyl acrylate, n-butyl acrylate, i-butyl acrylate, t-butyl acrylate, 2-ethylhexyl acrylate, n-lauryl acrylate, n-stearyl acrylate, cyclohexyl acrylate, phenyl acrylate, benzyl acrylate, isobornyl acrylate, 2-methoxyethyl acrylate, 2-ethoxyethyl acrylate, and phenoxyethyl acrylate; hydroxy group-containing acrylates such as 2-hydroxyethyl acrylate, 2-hydroxypropyl acrylate, 4-hydroxybutyl acrylate, and glycerol acrylate; carboxy group-containing acrylates such as 2-acryloyloxyethylhexahydrophthalic acid, 2-acryloyloxypropylhexahydrophthalic acid, 2-acryloyloxyethylphthalic acid, 2-acryloyloxypropylphthalic acid, 2-acryloyloxyethylmaleic acid, 2-acryloyloxypropylmaleic acid, 2-acryloyloxyethylsuccinic acid, and 2-acryloyloxypropylsuccinic acid; epoxy group-containing acrylates such as glycidyl acrylate, glycidyl α-ethyl acrylate, and 3,4-epoxy butyl acrylate; amino group-containing acrylates such as dimethylaminoethyl acrylate and diethylaminoethyl acrylate; and polyfunctional acrylates such as ethylene glycol diacrylate, 1,3-butylene glycol diacrylate, 1,6-hexanediol diacrylate, triethylene glycol diacrylate, tetraethylene glycol diacrylate, tripropylene glycol diacrylate, trimethylolpropane triacrylate, allyl acrylate, and N,N'-methylenebisacrylamide.

One of these may be used alone, or two or more of these may be used in combination.

Among the monomers described above, 2-ethylhexyl acrylate, 4-hydroxybutyl acrylate, n-butyl acrylate, n-propyl acrylate, ethyl acrylate, and 2-hydroxyethyl acrylate are preferable because the Tg of the homopolymer of these monomers is lower than 0°C. Further, methyl acrylate, ethyl acrylate, and n-butyl acrylate are preferable because they are easily available.

The aromatic vinyl used for the monomer (b2) is used for the purpose of adjusting the refractive index of the polymer (B2) and adjusting the polymerization rate when the polymer (B2) and the (meth)acrylic copolymer (B) are manufactured.

The content proportion of the aromatic vinyl used in the monomer (b2) is preferably from 10 to 30 mass%, preferably from 13 to 21 mass%, and preferably from 15 to 19 mass% with respect to a total mass of 100 mass% of the monomer (b2).

When the content proportion of the aromatic vinyl contained in the monomer (b2) is 10 mass% or more, the resin composition, the molding material, and the molded body of the present disclosure can exhibit favorable transparency. When the content proportion of the aromatic vinyl contained in the monomer (b2) is 30 mass% or less, the polymerization reaction rate in manufacturing the (meth)acrylic copolymer (B) is sufficiently high.

Examples of the aromatic vinyl include styrene, α-methylstyrene, o-methylstyrene, p-methylstyrene, o-ethylstyrene, p-ethylstyrene and p-t-butylstyrene, vinylethylbenzene, vinyltoluene, vinylxylene, vinylnaphthalene, diphenylethylene, and divinylbenzene. Among these, styrene is preferable from the viewpoint of practical physical properties and productivity.

One of these may be used alone, or two or more of these may be used in combination.

The monomer (b2) of the present disclosure may contain an additional monomer copolymerizable with the acrylate and the aromatic vinyl as necessary.

Examples of the additional monomer include methacrylates such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, n-lauryl methacrylate, n-stearyl methacrylate, cyclohexyl methacrylate, phenyl methacrylate, benzyl methacrylate, isobornyl methacrylate, 2-methoxyethyl methacrylate, 2-ethoxyethyl methacrylate, and phenoxyethyl methacrylate; hydroxy group-containing methacrylates such as 2-hydroxyethyl methacrylate, 2-hydroxypropyl methacrylate, 4-hydroxybutyl methacrylate, and glycerol methacrylate; carboxy group-containing methacrylates such as 2-methacryloyloxyethylhexahydrophthalic acid, 2-methacryloyloxypropylhexahydrophthalic acid, 2-methacryloyloxyethylphthalic acid, 2-methacryloyloxypropylphthalic acid, 2-methacryloyloxyethylmaleic acid, 2-methacryloyloxypropylmaleic acid, 2-methacryloyloxyethylsuccinic acid, and 2-methacryloyloxypropylsuccinic acid; epoxy group-containing methacrylates such as glycidyl methacrylate and 3,4-epoxybutyl methacrylate; amino group-containing methacrylates such as dimethylaminoethyl methacrylate and diethylaminoethyl methacrylate; and polyfunctional methacrylates such as ethylene glycol dimethacrylate, 1,3-butylene glycol dimethacrylate, 1,6-hexanediol dimethacrylate, triethylene glycol dimethacrylate, tetraethylene glycol dimethacrylate, tripropylene glycol dimethacrylate, trimethylolpropane trimethacrylate, and allyl methacrylate.

One or more of these can be appropriately selected and used.

Examples of the additional monomer further include carboxy group-containing vinyl-based monomers such as (meth)acrylic acid, crotonic acid, fumaric acid, maleic acid, itaconic acid, monomethyl maleate, and monomethyl itaconate; acid anhydride group-containing vinyl-based monomers such as maleic anhydride and itaconic anhydride; vinyl-based monomers containing amide groups such as (meth)acrylamide, N-t-butyl (meth)acrylamide, N-methylol (meth)acrylamide, N-methoxymethyl (meth)acrylamide, N-butoxymethyl (meth)acrylamide, diacetone acrylamide, maleic acid amide, and maleimide; and vinyl-based monomers such as (meta)acrylonitrile, vinyl chloride, vinyl acetate, and vinyl propionate.

The proportion of the additional monomer to be used is preferably 20 mass% or less, preferably 10 mass% or less, and preferably 5 mass% or less with respect to a total of 100 mass% of the monomers (b2). The additional monomer does not have to be used.

### Method for Manufacturing (Meth)Acrylic Copolymer (B)

Examples of the method for manufacturing the (meth)acrylic copolymer (B) according to the present disclosure include a living polymerization method and a method using a macromonomer (b1) described later.

Examples of the living polymerization method include a living radical polymerization method and a living anion polymerization method. Examples of the living radical polymerization method include reversible addition fragmentation chain transfer polymerization (RAFT), atom transfer radical polymerization (ATRP), nitroxide-mediated polymerization (NMP), and living radical polymerization (TERP) using organic tellurium as a growth terminal.

The method using the macromonomer (b1) is advantageous in that the (meth)acrylic copolymer (B) can be manufactured relatively easily. The method using the macromonomer (b1) is preferable because there is an advantage that it is not necessary to remove residues of a catalyst and an auxiliary agent required in the living polymerization method or to perform a terminal treatment step.

### Method for Manufacturing (Meth)Acrylic Copolymer (B) Using Macromonomer

When the (meth)acrylic copolymer (B) is manufactured using a macromonomer, the macromonomer may be used as either the polymer (B1) or the polymer (B2). Specifically, a macromonomer copolymer is produced by copolymerizing the macromonomer with a comonomer copolymerizable with the macromonomer. This macromonomer copolymer is used as the (meth)acrylic copolymer (B).

Here, as an example, a method for manufacturing a macromonomer copolymer by using the macromonomer (b1) as a raw material of the polymer (B1) and copolymerizing the macromonomer (b1) with the monomer (b2) will be described. In this case, the polymer (B2) has the monomer (b2) as a monomer unit.

### Method for Manufacturing Macromonomer (b1)

The macromonomer (b1) can be manufactured by a known method. Examples of the method for manufacturing a macromonomer include a method for manufacturing a macromonomer using a cobalt chain transfer agent (US 4,680,352), a method using an α-substituted unsaturated compound such as α-bromomethylstyrene as a chain transfer agent (WO 88/04304), a method for chemically bonding a polymerizable group (JP S60-133007 A, US 5,147,952, and JP H06-298921 A), and a method using thermal decomposition (JP H11-240854 A).

Among these, as the method for manufacturing the macromonomer (b1), a method for manufacturing the macromonomer (b1) using a cobalt chain transfer agent is preferable from the viewpoints of a small number of manufacturing steps and using a catalyst having a high chain transfer constant.

Examples of the method for manufacturing the macromonomer (b1) using a cobalt chain transfer agent include a mass polymerization method, a solution polymerization method, and aqueous dispersion polymerization methods such as a suspension polymerization method and an emulsion polymerization method.

Among these, an aqueous dispersion polymerization method is preferable from the viewpoint of simplifying the step of recovering the macromonomer (b1).

As the cobalt chain transfer agent used in the present disclosure, a cobalt chain transfer agent represented by General Formula (2) shown below can be used. As the cobalt chain transfer agent, those described in, for example, JP 3587530 B, JP H06-23209 A, JP H07-35411 A, US 4,526,945, US 4,694,054, US 4,834,326, US 4,886,861, US 5,324,879, WO 95/17435, and JP H09-510499 A can be used.

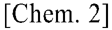

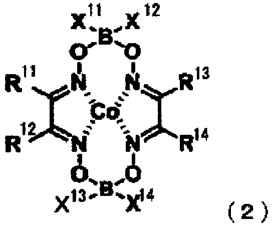

wherein
R¹¹ to R¹⁴ are each independently an alkyl group, a cycloalkyl group, or an aryl group; and X¹¹ to X¹⁴ are each independently an F atom, a Cl atom, a Br atom, an OH group, an alkoxy group, an aryloxy group, an alkyl group, or an aryl group.

Specific examples of the cobalt chain transfer agent include bis(boron difluorodimethyldioxyiminocyclohexane) cobalt (II), bis(boron difluorodimethylglyoxymate) cobalt (II), bis(boron difluorodiphenylglyoxymate) cobalt (II), a cobalt (II) complex of a vicinal imino hydroxyimino compound, a cobalt (II) complex of tetraazatetraalkylcyclotetradecatetraene, an N,N'-bis(salicylidene) ethylenediaminocobalt (II) complex, a cobalt (II) complex of dialkyldiazadioxodialkyldodecadiene, and a cobalt (II) porphyrin complex.

Among these, bis(boron difluorodiphenylglyoxymate) cobalt (II) (R¹¹ to R¹⁴: phenyl group, X¹¹ to X¹⁴: F atom), which is stably present in an aqueous medium and has a high chain transfer effect, is preferable.

One or more of these can be appropriately selected and used.

The amount of the cobalt chain transfer agent used is preferably 5 ppm to 350 ppm with respect to 100 parts by mass of the monomer for producing the macromonomer (b1). When the amount of the cobalt chain transfer agent used is 5 ppm or more, the reduction in molecular weight tends to be sufficient. When the amount of the cobalt chain transfer agent used is 350 ppm or less, the resulting macromonomer (b1) is hardly colored.

Examples of the solvent used in producing the macromonomer (b1) by a solution polymerization method include hydrocarbons such as toluene; ethers such as diethyl ether and tetrahydrofuran; halogenated hydrocarbons such as dichloromethane and chloroform; ketones such as acetone; alcohols such as methanol; nitriles such as acetonitrile; esters such as ethyl acetate; carbonates such as ethylene carbonate; and supercritical carbon dioxides.

One of these may be used alone, or two or more of these may be used in combination.

### Method for Manufacturing Macromonomer Copolymer

The method for manufacturing a macromonomer copolymer includes a step of polymerizing a polymerizable mixture containing a polymerizable composition (X) and a polymerization initiator described later.

The polymerizable composition (X) contains the macromonomer (b1) represented by General Formula (1) shown below and a comonomer copolymerizable with the macromonomer (b1). As the comonomer, a comonomer copolymerizable with the macromonomer (b1) is appropriately selected from the monomers (b2) and used.

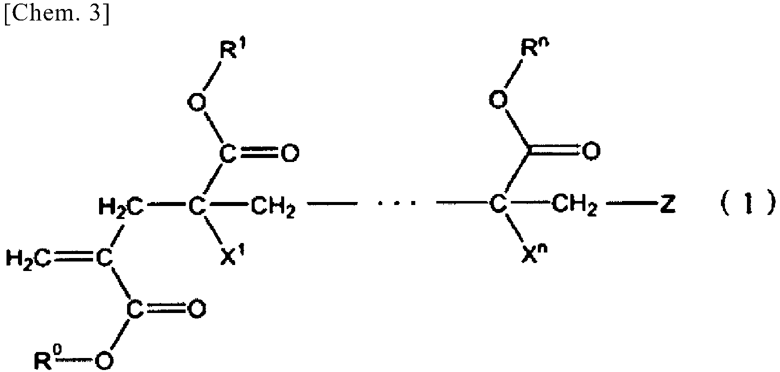

wherein
R⁰ to Rⁿ are each independently a hydrogen atom, an alkyl group, a cycloalkyl group, an aryl group, or a heterocyclic group; X¹ to Xⁿ are each independently a hydrogen atom or a methyl group; Z is a terminal group; and n is a natural number of 1 to 10000.

### R⁰ to Rⁿ

In Formula (1), the alkyl group, cycloalkyl group, aryl group, or heterocyclic group of R⁰ to Rⁿ may have a substituent.

Examples of the alkyl group of R⁰ to Rⁿ include a branched or linear alkyl group having 1 to 20 carbon atoms. Specific examples include a methyl group, an ethyl group, an n-propyl group, an i-propyl group, an n-butyl group, an i-butyl group, a t-butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group. Among these, from the viewpoint of availability, a methyl group, an ethyl group, an n-propyl group, an i-propyl group, an n-butyl group, a t-butyl group, a pentyl group, a hexyl group, a heptyl group, and an octyl group are preferable, a methyl group, an ethyl group, an n-propyl group, an i-propyl group, an n-butyl group, and a t-butyl group are more preferable, and a methyl group is particularly preferable.

Examples of the cycloalkyl group of R⁰ to Rⁿ include a cycloalkyl group having 3 to 20 carbon atoms. Specific examples include a cyclopropyl group, a cyclobutyl group, a cyclopentyl group, a cyclohexyl group, a cycloheptyl group, a cyclooctyl group, a t-butylcyclohexyl group, an isobornyl group, and an adamantyl group. Among these, a cyclopropyl group, a cyclobutyl group, and an adamantyl group are preferable from the viewpoint of availability.

Examples of the aryl group of R⁰ to Rⁿ include an aryl group having 6 to 18 carbon atoms. Specific examples thereof include a phenyl group, a benzyl group, and a naphthyl group.

Examples of the heterocyclic group of R⁰ to Rⁿ include a heterocyclic group having 5 to 18 carbon atoms. Specific examples thereof include a γ-lactone group, an ε-caprolactone group, and a morpholine group. Examples of the hetero atom contained in the heterocyclic ring include an oxygen atom, a nitrogen atom, and a sulfur atom.

Examples of the substituent that R⁰ to Rⁿ may have include a group or an atom each independently selected from the group consisting of an alkyl group, an aryl group, a carboxy group, an alkoxycarbonyl group (-COOR'), a carbamoyl group (-CONR'R"), a cyano group, a hydroxy group, an amino group, an amide group (-NR'R"), a halogen atom, an allyl group, an epoxy group, an alkoxy group (-OR'), and a group exhibiting hydrophilicity or ionicity. Examples of R' or R" each independently include the same groups as R⁰ to Rⁿ (excluding heterocyclic groups).

Examples of the alkoxycarbonyl group as the substituent of R⁰ to Rⁿ include a methoxycarbonyl group.

Examples of the carbamoyl group as the substituent of R⁰ to Rⁿ include an N-methylcarbamoyl group and an N,N-dimethylcarbamoyl group.

Examples of the amide group as the substituent of R⁰ to Rⁿ include a dimethylamide group.

Examples of the halogen atom as the substituent of R⁰ to Rⁿ include a fluorine atom, a chlorine atom, a bromine atom, and an iodine atom.

Examples of the alkoxy group as the substituent of R⁰ to Rⁿ include an alkoxy group having 1 to 12 carbon atoms. Specific examples thereof include a methoxy group.

Examples of the hydrophilic or ionic group as the substituent of R⁰ to Rⁿ include cationic substituents such as an alkali salt of a carboxy group or an alkali salt of a sulfoxyl group, a poly(alkylene oxide) group such as a polyethylene oxide group or a polypropylene oxide group, and a quaternary ammonium base.

R⁰ to Rⁿ are preferably at least one selected from an alkyl group and a cycloalkyl group, and preferably an alkyl group.

As the alkyl group, a methyl group, an ethyl group, an n-propyl group, or an i-propyl group is preferable, and a methyl group is more preferable from the viewpoint of availability.

### X¹ to Xⁿ

In Formula (1), X¹ to Xⁿ are preferably a methyl group in an amount of 80 mol% or more with respect to 100 mol% of the total number of moles of X¹ to Xⁿ from the viewpoint of ease of synthesis of the macromonomer (b1).

### Z

In Formula (1), Z is a terminal group of the macromonomer (b1). Examples of the terminal group of the macromonomer (b1) include groups derived from a hydrogen atom and a radical polymerization initiator, like the terminal group of a polymer produced through known radical polymerization.

The lower limit of the content proportion of the methyl methacrylate unit contained in the macromonomer (b1) is not particularly limited. It is advantageous for improving impact resistance and transparency when the lower limit is 50 mass% or more with respect to a total mass of 100 mass% of the macromonomer (b1). The lower limit of the content proportion of the methyl methacrylate unit is preferably 50 mass% or more, preferably 80 mass% or more, preferably 90 mass% or more, and preferably 95 mass% or more.

On the other hand, the upper limit of the content proportion of the methyl methacrylate unit is not particularly limited, and it may be 100 mass% of the methyl methacrylate unit, or may be 99 mass% or less with respect to a total mass of 100 mass% of the macromonomer (b1).

In the method for manufacturing a macromonomer copolymer, the polymerization reaction is preferably performed using a radical polymerization method. Examples of the radical polymerization method include bulk polymerization methods such as a mass polymerization method and a cast polymerization method, solution polymerization methods, and aqueous dispersion polymerization methods such as a suspension polymerization method and an emulsion polymerization method.

An aqueous dispersion polymerization method such as a suspension polymerization method or an emulsion polymerization method is preferable because the step of recovering the macromonomer copolymer can be simplified. The suspension polymerization method is more preferable from the viewpoint of favorable handleability of the resulting polymer particles.

In the suspension polymerization method, the macromonomer copolymer is produced as spherical particles having an average particle size of about 5 µm to 1 mm. The resulting spherical particles have favorable handleability, and when used in processing operations such as extrusion and molding, there is little concern of dust scattering. Thus, the spherical particles are suitable as a resin composition. The spherical particles are preferable because the resin composition produced by the suspension polymerization method has favorable moldability.

It is not clear why the suspension polymerization method is better than the emulsion polymerization method, but it is presumed that, in the emulsion polymerization, a small amount of abnormal polymers generated, a remaining emulsifier, and the like cause foreign matters and thickening, but the suspension polymerization method does not have such a problem, and thus the suspension polymerization method is better than the emulsion polymerization method.

Details of the suspension polymerization method will be described later.

Alternatively, the polymerization reaction in the manufacturing of the macromonomer copolymer may be performed using a bulk polymerization method such as a mass polymerization method or a cast polymerization method, and may include a step of heating and polymerizing the polymerizable mixture.

In the case of the solution polymerization method, it is also possible to produce a macromonomer copolymer by manufacturing the macromonomer (b1) through solution polymerization, adding the monomer (b2) and a thermal polymerization initiator to the solution as it is, and performing a copolymerization reaction.

In the method for manufacturing a macromonomer copolymer according to the present disclosure, the polymerizable mixture may contain a sulfur-containing chain transfer agent.

Here, the sulfur-containing chain transfer agent refers to a mercaptan compound, such as n-butyl mercaptan or n-octyl mercaptan, added as a chain transfer agent to adjust the molecular weight of the copolymer during polymerization.

When the polymerizable composition contains a sulfur-containing chain transfer agent, the upper limit of the content is preferably less than 0.01 parts by mass with respect to 100 parts by mass of the polymerizable composition (X). When the upper limit of the content of the sulfur-containing chain transfer agent is less than 0.01 parts by mass, widening of the composition distribution of the copolymer can be suppressed, and the resulting molded body can have favorable impact resistance. The lower limit of the content of the sulfur-containing chain transfer agent is not particularly limited, but it is preferable that the polymerizable composition contain no sulfur-containing chain transfer agent.

In the manufacturing of the macromonomer copolymer, polymerization can be performed such that the resulting macromonomer copolymer has a mass-average molecular weight (Mw) of 240000 or more and 3500000 or less.

The lower limit of the mass-average molecular weight (Mw) of the macromonomer copolymer is preferably 240000 or more, preferably 300000 or more, and preferably 600000 or more. When the mass-average molecular weight (Mw) of the macromonomer copolymer is 240000 or more, the resin composition, the molding material, and the molded body of the present disclosure have favorable flexibility and impact resistance.

On the other hand, the upper limit of the mass-average molecular weight (Mw) of the copolymer is preferably 3500000 or less, preferably 3000000 or less, and preferably 2000000 or less. When the mass-average molecular weight (Mw) of the macromonomer copolymer is 3500000 or less, the resin composition and the molding material of the present disclosure have favorable moldability, and the molded body has favorable transparency. The above upper values and lower limit values can be combined in any manner.

The method for controlling the mass-average molecular weight (Mw) of the copolymer to 240000 or more is not particularly limited, but those skilled in the art can control the mass-average molecular weight by adjusting the polymerization method, the type and addition amount of the polymerization initiator, the addition amount of the chain transfer agent, the polymerization temperature, and the like according to a well-known technique.

### Polymerizable Composition (X)

The polymerizable composition (X) is one of raw materials of the (meth)acrylic copolymer (B).

The content proportion (b1, in mass%) of the macromonomer (b1) and the content proportion (b2, in mass%) of the monomer (b2) contained in the polymerizable composition (X) are preferably b1:b2 = 35 to 75 mass%:65 to 25 mass%, preferably b1:b2 = 40 to 70 mass%:60 to 30 mass%, preferably b1:b2 = 45 to 70 mass%:55 to 30 mass%, preferably b1:b2 = 50 to 65:50 to 35 mass%, and preferably b1:b2 = 55 to 65 mass%:45 to 35 mass% with respect to a total mass of 100 mass% of the polymerizable composition (X). The content proportion (b1, in mass%) of the macromonomer (b1) and the content proportion (b2, in mass%) of the monomer (b2) contained in the polymerizable composition (X) are preferably b1:b2 = 35:65 to 75:25 mass%, preferably b1:b2 = 40:60 to 70:30 mass%, preferably b1:b2 = 45:55 to 70:30 mass%, preferably b1:b2 = 50:50 to 65:35 mass%, and preferably b1:b2 = 55:45 to 65:35 mass% with respect to a total mass of 100 mass% of the polymerizable composition (X).

When the lower limit of the content proportion of the macromonomer (b1) contained in the polymerizable composition (X) is 35 mass% or more, or the upper limit of the content proportion of the monomer (b2) is 65 mass% or less with respect to a total mass of 100 mass% of the polymerizable composition (X), the macromonomer copolymer has favorable handleability.

When the lower limit of the content proportion of the monomer (b2) contained in the polymerizable composition (X) is 25 mass% or more, or the upper limit of the content proportion of the macromonomer (b1) is 75 mass% or less with respect to a total mass of 100 mass% of the polymerizable composition (X), the resin composition containing the macromonomer copolymer and the resulting molded body can favorably maintain the impact resistance.

### Manufacturing of Macromonomer Copolymer through Suspension Polymerization

A case where the polymerization reaction is performed using a suspension polymerization method will be described in detail below.

In the method for manufacturing a macromonomer copolymer, when a macromonomer copolymer is manufactured using a suspension polymerization method, specific examples thereof include methods (1) and (2) shown below.
(1) A method including steps i) to v) shown below: This method is a method in which the manufacturing of the macromonomer (b1) and the manufacturing a macromonomer copolymer in the present disclosure are performed separately.
(2) A method being the same as the method (1), except for including steps I) to II) shown below in place of steps i) to iii) shown below among steps i) to v) shown below: This method is a method of continuously performing the manufacturing of the macromonomer (b1) in the present disclosure and the manufacturing of the macromonomer copolymer of the present disclosure.

### i) Syrup Preparation Step

The bead-like macromonomer (b1) manufactured through suspension polymerization is dissolved in a solution containing the monomer (b2) to prepare a syrup, and this syrup is used as the polymerizable composition (X).

When the polymerizable composition (X) is prepared, a mixture containing the macromonomer (b1) and the monomer (b2) is heated at a temperature equal to or lower than the boiling point of the monomer (b2), and thus the dissolution of the macromonomer (b1) can be promoted. The temperature at which the polymerizable composition (X) is prepared is preferably in the range from 20°C to 100°C, and preferably in the range from 40°C to 80°C. In a case where the radical polymerization initiator to be used does not react at the temperature for preparing the polymerizable composition (X), the polymerizable composition (X) is mixed with a radical polymerization initiator to produce a polymerizable mixture, and then the polymerizable mixture can be heated.

### ii) Radical Polymerization Initiator Dissolution Step

In a case where the radical polymerization initiator reacts at a temperature for preparing the polymerizable composition (X) produced in step i), the polymerizable composition (X) is once cooled to a temperature equal to or lower than room temperature, and then a radical polymerization initiator is added and uniformly dissolved to produce a polymerizable mixture. The temperature of the polymerizable composition (X) when the radical polymerization initiator is added is preferably equal to or lower than a temperature obtained by subtracting 15°C from the 10-hour half-life temperature of the radical polymerization initiator.

### iii) Aqueous Solution Preparation Step

The polymerizable mixture and an aqueous solution are mixed and then stirred to prepare a suspension in which droplets of the polymerizable mixture are dispersed in the aqueous solution. The aqueous solution is an aqueous solution for dispersing the polymerizable mixture, and may contain a dispersant, an electrolyte, and additional auxiliaries. By appropriately selecting the combination of the dispersant and the electrolyte, dispersibility of the droplets of the polymerizable mixture formed in the aqueous solution can be controlled when the polymerizable mixture is dispersed in the aqueous solution.

As the water used for the aqueous solution, deionized water is preferably used because the droplets of the polymerizable mixture have favorable dispersibility.

Examples of the dispersant include an alkali metal salt of poly(meth)acrylic acid, a copolymer of an alkali metal salt of (meth)acrylic acid and a (meth)acrylic acid ester, a copolymer of an alkali metal salt of sulfoalkyl (meth)acrylate and a (meth)acrylic acid ester, an alkali metal salt of polystyrene sulfonic acid, a copolymer of an alkali metal salt of styrene sulfonic acid and a (meth)acrylic acid ester, and a copolymer including a combination of these monomers; and polyvinyl alcohol, methyl cellulose, starch, and hydroxyapatite having a saponification degree of 70 to 100%.

One of these may be used alone, or two or more of these may be used in combination.

Among these, a copolymer of an alkali metal salt of sulfoalkyl (meth)acrylate and a (meth)acrylic acid ester and a copolymer of an alkali metal salt of (meth)acrylic acid and a (meth)acrylic acid ester, which have favorable dispersion stability during suspension polymerization, are preferable.

The dispersant is used, for example, in the range from 0.0005 to 0.5 parts by mass with respect to 100 parts by mass of the polymerizable composition (X).

Examples of the electrolyte include sodium carbonate, sodium sulfate, and manganese sulfate.

The electrolyte is used, for example, in the range from 0.01 to 1.0 parts by mass with respect to 100 parts by mass of the polymerizable composition (X).

### I) Syrup Preparation Step

A solution containing the monomer (b2) is added in a state where the bead-like macromonomer (b1) manufactured through suspension polymerization is dispersed in an aqueous solution to prepare the polymerizable composition (X).

The temperature for dissolving the macromonomer (b1) in the solution containing the monomer (b2) is preferably in the range from 20°C to 100°C, preferably in the range from 40°C to 90°C, and preferably in the range from 50°C to 80°C. As the aqueous solution, the same aqueous solution as in iii) described above can be used.

### II) Radical Polymerization Initiator Dissolution Step

In a case where the radical polymerization initiator reacts at a temperature for preparing the polymerizable composition (X) produced in the step I), the polymerizable composition (X) is once cooled to a temperature equal to or lower than room temperature, and then a radical polymerization initiator is added and uniformly dissolved to produce a polymerizable mixture. The temperature of the polymerizable composition (X) when the radical polymerization initiator is added is preferably equal to or lower than a temperature obtained by subtracting 15°C from the 10-hour half-life temperature of the radical polymerization initiator.

When the polymerization reaction is performed in the presence of a radical polymerization initiator, as the radical polymerization initiator, known organic peroxides such as 2,4-dichlorobenzoyl peroxide and t-butyl peroxypivalate, and known azo compounds such as 2,2'-azobisisobutyronitrile and 2,2'-azobis(2,4-dimethylvaleronitrile), can be used.

The blending amount of the radical polymerization initiator can be appropriately selected by those skilled in the art according to a well-known technique. Usually, the blending amount of the radical polymerization initiator is from 0.0001 to 10 parts by mass with respect to 100 parts by mass of the total amount of the polymerizable composition (X).

### iv) Polymerization Reaction Step

Next, the temperature of the resulting suspension is raised while stirring to start a polymerization reaction. It is preferable to remove dissolved oxygen by subjecting the polymerizable mixture before heating and the aqueous solution to vacuum degassing or nitrogen purging.

The polymerization temperature at the time of performing the polymerization reaction is an important condition for producing a macromonomer copolymer in high yield. The polymerization temperature as used herein refers to the temperature of the suspension. The polymerization temperature is preferably from 50°C to 90°C, preferably from 60°C to 85°C, and preferably from 65°C to 80°C. When the polymerization temperature is too low, there is a concern that the reaction proceeds slowly and the polymerization time becomes long. When the polymerization temperature is too high, cleavage of an adduct radical which is a reaction intermediate preferentially occurs, and the yield of the macromonomer copolymer tends to decrease.

In the late stage of the polymerization reaction, the suspension can be heated for the purpose of increasing the reaction rate of the polymerizable composition (X) and eliminating the unreacted radical polymerization initiator. The temperature at which the suspension is heated is preferably 80°C or higher, and preferably 85°C or higher. The heating time may be determined by calculating the time until the radical polymerization initiator is eliminated, and is usually about 30 minutes to 2 hours.

### V) Recovery Step

After the step described above, the suspension is cooled to a temperature equal to or lower than room temperature, and then the produced bead-like copolymer is recovered using a known method such as filtration. As necessary, a washing step for removing impurities such as a dispersant and an electrolyte, a step of removing beads mixed with bubbles, a drying step, and the like can be performed.

The finally produced bead-like macromonomer copolymer is used as the (meth)acrylic copolymer (B) of the present disclosure.

### Rubbery Graft Polymer (C) Having Crosslinked Structure

The resin composition of the first embodiment contains a rubbery graft polymer (C) having a crosslinked structure.

The resin composition of the second embodiment may contain a rubbery graft polymer (C) having a crosslinked structure.

The rubbery graft polymer (C) having a crosslinked structure is different from the (meth)acrylic copolymer (B), and the rubbery graft polymer (C) having a crosslinked structure is a particulate rubber (core-shell rubber) containing a core composed of a rubbery portion and a shell component having a function such as compatibility with a matrix.

The core-shell rubber of the rubbery graft polymer (C) having a crosslinked structure is used for the purpose of imparting flexibility and impact resistance to the resin composition, the molding material, and the molded body of the present disclosure. In particular, to achieve toughness improvement that is difficult to improve with the (meth)acrylic copolymer (B) and have favorable results in a notched Charpy impact test, use of the rubbery graft polymer (C) having a crosslinked structure is effective. The (meth)acrylic copolymer (B) may have anisotropy in mechanical properties because of the orientation of the rubber component in the flow direction during injection molding. On the other hand, in the core-shell rubber, deformation of the rubber domain during injection molding is small because of crosslinking of the rubber particles, and there is an effect of eliminating anisotropy by using the (meth)acrylic copolymer (B) and the rubbery graft polymer (C) having a crosslinked structure in combination.

The rubbery graft polymer (C) having a crosslinked structure can be appropriately selected from those generally available and used. Examples of the type of the core of the core-shell rubber include an acrylic rubber containing acrylate as a constituent unit, a butadiene rubber containing butadiene as a constituent unit, a butadiene-acrylic composite rubber containing butadiene and acrylate as constituent units, and a silicone-acrylic composite rubber containing dimethylsiloxane and acrylate as constituent units.

Among these, those in which the refractive index of the core and the refractive index of the (meth)acrylic polymer (A) are close to each other are preferable because the resin composition has favorable transparency. From the viewpoint of the refractive index, the type of the core is preferably an acrylic rubber containing acrylate as a constituent unit, or a butadiene-acrylic composite rubber containing butadiene and acrylate as constituent units.

The type of the core is preferably acrylic rubber or silicone-acrylic composite rubber containing dimethylsiloxane and acrylate as constituent units because the resin composition has favorable weather resistance.

From the viewpoint of the effect of improving toughness and impact resistance, the type of the core is preferably a butadiene rubber containing butadiene as a constituent unit, a butadiene-acrylic composite rubber containing butadiene and acrylate as constituent units, or a silicone-acrylic composite rubber containing dimethylsiloxane and acrylate as constituent units.

A silicone-acrylic composite rubber is particularly preferable from the viewpoint of achieving both improvement in toughness and impact resistance and weather resistance.

The type of the core can be appropriately selected and used depending on the required performance of the molded body. A plurality of core-shell rubbers having different core types may be used in combination.

The rubbery graft polymer (C) having a crosslinked structure is not particularly limited, but preferably has a multilayer structure made of three or more layers, including an inner layer, an intermediate layer, and a graft layer.

The mass-average particle size of the rubbery graft polymer (C) having a crosslinked structure is preferably 50 nm or more, preferably 100 nm or more, and preferably 200 nm or more. The mass-average particle size of the rubbery graft polymer (C) having a crosslinked structure is preferably 1000 nm or less, preferably 700 nm or less, preferably 600 nm or less, and preferably 500 nm or less.

When the mass-average particle size is 50 nm or more, it functions as a rubber, and toughness and impact resistance can be improved. When the mass-average particle size is 1000 nm or less, the number of particles increases, and favorable toughness and impact resistance are achieved.

The mass-average particle size of the rubbery graft polymer (C) having a crosslinked structure is measured by the method described in the section of Examples shown below.

The lower limit of the content proportion of the rubbery graft polymer (C) having a crosslinked structure in the resin composition of the first embodiment and the content proportion of the rubbery graft polymer (C) having a crosslinked structure when the resin composition of the second embodiment contains the rubbery graft polymer (C) having a crosslinked structure is preferably 5 mass% or more, preferably 10 mass% or more, and preferably 15 mass% or more with respect to a total of 100 mass% of the resin composition of the present disclosure. By containing 5 mass% or more of the rubbery graft polymer (C) having a crosslinked structure, toughness, flexibility, and impact resistance can be effectively imparted to the resin composition, the molding material, and the molded body of the present disclosure. In addition, a molded body having less anisotropy can be produced.

The upper limit of the content proportion of the rubbery graft polymer (C) having a crosslinked structure is preferably 50 mass% or less, preferably 40 mass% or less, and preferably 30 mass% or less with respect to a total of 100 mass% of the resin composition of the present disclosure. When the content proportion of the rubbery graft polymer (C) having a crosslinked structure is 50 mass% or less, favorable moldability can be secured in the resin composition and the molding material of the present disclosure.

### (Meth)Acrylic Polymer (D)

The resin composition of the second embodiment contains a (meth)acrylic polymer (D) different from both of the (meth)acrylic polymer (A) and the (meth)acrylic copolymer (B).

The resin composition of the first embodiment may also contain the (meth)acrylic polymer (D).

The (meth)acrylic polymer (D) has an effect of suppressing the haze of the molded body of the present disclosure manufactured by injection molding to a low level and suppressing molding defects to improve the appearance quality.

The (meth)acrylic polymer (D) is a random copolymer and/or a homopolymer.

The (meth)acrylic polymer (D) contains 50 mass% or more of methyl methacrylate units, and has a mass-average molecular weight (Mw) of 500000 or more.

The proportion of the repeating unit derived from methyl methacrylate to a total of 100 mass% of the (meth)acrylic polymer (D) is from 50 to 100 mass%, preferably from 60 to 90 mass%, and preferably from 70 to 85 mass%.

When the proportion of the repeating unit derived from methyl methacrylate contained in the (meth)acrylic polymer (D) is 50 mass% or more, favorable compatibility and miscibility are achieved between the (meth)acrylic polymer (A) and the (meth)acrylic polymer (D).

When the proportion of the repeating unit derived from methyl methacrylate to a total of 100 mass% of the (meth)acrylic polymer (D) is 100 mass% or less, the softening temperature can be adjusted, or the thermal decomposition resistance can be improved. That is, various performances can be balanced by copolymerizing the (meth)acrylic polymer (D) with a monomer other than methyl methacrylate.

Examples of the comonomer that forms a comonomer unit other than the methyl methacrylate unit contained in the (meth)acrylic polymer (D) include alkyl acrylates such as methyl acrylate, ethyl acrylate, propyl acrylate, and n-butyl acrylate. By copolymerizing methyl methacrylate with these comonomers, the thermal decomposition resistance during melt molding of the (meth)acrylic polymer (D) can be improved.

The lower limit of the mass-average molecular weight (Mw) of the (meth)acrylic polymer (D) calibrated with polystyrene in the present disclosure is 500000 or more, preferably 700000 or more, and preferably 1000000 or more. When the mass-average molecular weight (Mw) of the (meth)acrylic polymer (D) is 500000 or more, the resulting molded body has favorable transparency, and the molded body produced by injection molding has a favorable appearance quality.

The upper limit of the mass-average molecular weight (Mw) of the (meth)acrylic polymer (D) is preferably 10000000 or less, preferably 6000000 or less, and preferably 4000000 or less. When the mass-average molecular weight (Mw) of the (meth)acrylic polymer (D) is 10000000 or less, favorable moldability is achieved.

As the (meth)acrylic polymer (D), a commercially available product can also be used. Examples of commercially available products of the (meth)acrylic polymer (D) include acrylic macromolecule processing aids typified by Metablen (trade name) P type manufactured by Mitsubishi Chemical Corporation. Examples of the Metablen (trade name) P type include P-531A, P-530A, P-551A, P-550A, P-501A, and P-570A.

One type of (meth)acrylic polymer (D) may be used alone, or two or more thereof having different resin compositions, physical properties, or the like may be mixed and used.

The content proportion of the (meth)acrylic polymer (D) in the resin composition of the second embodiment and the content proportion of the (meth)acrylic polymer (D) when the resin composition of the first embodiment contains the (meth)acrylic polymer (D) are 0.2 mass% or more, preferably 0.5 mass% or more, and preferably 1.0 mass% or more with respect to a total of 100 mass% of the resin composition of the present disclosure. When the content proportion of the (meth)acrylic polymer (D) is 0.2 mass% or more, the haze of the molded body of the present disclosure manufactured by injection molding is suppressed to a low level, and an effect of suppressing molding defects such as flow marks and jetting and improving the appearance quality is exhibited.

The upper limit of the content proportion of the (meth)acrylic polymer (D) is 15 mass% or less, preferably 10 mass% or less, and preferably 5 mass% or less with respect to a total of 100 mass% of the resin composition of the present disclosure. When the content proportion of the (meth)acrylic polymer (D) is 15 mass% or less, the influence on the moldability of the resin composition and the molding material of the present disclosure can be suppressed.

### Additional Component

The resin composition of the present disclosure may contain an additional component other than the (meth)acrylic polymer (A), the (meth)acrylic copolymer (B), the rubbery graft polymer (C) having a crosslinked structure, and the (meth)acrylic polymer (D).

The additional component is added to the resin composition as necessary.

Examples of the additional component include a mold release agent, an antioxidant, a heat stabilizer, an impact resistance improver, a flexibility imparting agent, a weather resistance improver, a colorant, an inorganic pigment, an organic pigment, carbon black, ferrite, a conductivity imparting agent, an ultraviolet absorbent, an infrared absorbent, a lubricant, an inorganic filler, a reinforcing agent, a plasticizer, a reverse plasticizer, a neutralizer, a crosslinking agent, a flame retardant, an antiseptic agent, an insect repellent, an aromatic agent, a radical scavenger, a sound absorbing material, and a core-shell rubber.

One of these additional components may be used alone, or two or more thereof may be used in combination.

### Method for Manufacturing Resin Composition and Molding Material

The resin composition of the present disclosure can be manufactured by mixing raw materials according to a common method, and the method is not particularly limited. Examples of the mixing method include a method in which the raw materials are put in a single-screw extruder or a twin-screw extruder and heated, melted, and kneaded at about 220 to 280°C.

The resin composition of the present disclosure is suitably used as a molding material by being processed into pellets after being heated, melted, and kneaded.

### Molded Body

The resin composition and the molding material of the present disclosure are shaped by a known melt molding method such as extrusion molding, injection molding, compression molding, or hollow molding to form a molded body. The shape of the molded body of the present disclosure is not particularly limited, and examples thereof include a film shape, a sheet shape, a plate shape, a substantially box shape, and a three-dimensional shape having a curved surface portion.

The resin composition and the molding material of the first embodiment are particularly excellent in moldability, toughness, and impact resistance, and thus can be suitably used as a material for injection molding and a material for extrusion molding.

The resin composition and the molding material of the second embodiment are particularly excellent in moldability, flexibility, and transparency, and thus can be suitably used as a material for injection molding and a material for extrusion molding.

### Application of Molded Body

The molded body of the first embodiment is excellent in toughness and impact resistance, particularly impact resistance in a notched Charpy impact test.

The molded body of the second embodiment is excellent in flexibility, impact resistance, and transparency.

Thus, the molded body of the present disclosure can be suitably used for front plates for displays such as liquid crystal displays and organic EL displays, signboard articles, illumination articles, toys, containers, home appliances, vehicle components such as vehicle interior/exterior components, medical members, home installation members, industrial materials, building materials, lenses, light guide plates, light collecting members, optical members such as optical films used for displays (image display device) such as liquid crystal displays and organic EL displays, and the like.

In particular, a film-shaped molded body of the second present embodiment is not only excellent in impact resistance and transparency in a wide use temperature range, but also hardly whitened when the film-shaped molded body is bent. In addition, the film-shaped molded body of the second embodiment is less likely to be broken when repeatedly bent, and thus, the film-shaped molded body can be suitably used for a foldable display or the like.

### Examples

Hereinafter, the present embodiment will be described in more detail with reference to Examples, Comparative Examples, and Reference Examples. The present embodiment is not limited by the following examples.

Hereinafter, "part(s)" means "part(s) by mass".

### Evaluation Method

The evaluations in Examples, Comparative Examples, and Reference Examples were performed by the following methods.

### Mass-Average Molecular Weight (Mw) and Number-Average Molecular Weight (Mn) of Macromonomer (b1)

The mass-average molecular weight (Mw) and the number-average molecular weight (Mn) of the macromonomer (b1) produced in Examples, Comparative Examples, and Reference Examples were measured using a gel permeation chromatography method (GPC). A solution prepared by dissolving 10 mg of the produced copolymer in 10 mL of tetrahydrofuran and filtering the solution through a 0.45 µm filter was used as a sample for GPC measurement.

A macromolecular measurement guard column (manufactured by Tosoh Corporation, product name: TSK-GUARD COLUMN SUPER H-H) and two macromolecular measurement columns (manufactured by Tosoh Corporation, product name: TSK-GEL SUPER HM-H) were connected in series to a gel permeation chromatography measurement apparatus (manufactured by Tosoh Corporation, model name: HLC-8320 type) and used.

A differential refractometer (RI) was used as a detector.

The measurement was performed under the following conditions.
Separation column temperature: 40°C
Mobile phase: tetrahydrofuran
Flow rate of mobile phase: 0.6 mL/min
Sample injection amount: 10 µL

Using several types of polymethyl methacrylates having known molecular weights (manufactured by Polymer Laboratories, peak molecular weight (Mp) of 1560 to 19500000) as standard polymers, calibration curves were produced to determine Mw and Mn.

### Mass-Average Molecular Weight (Mw) and Number-Average Molecular Weight (Mn) of Macromonomer Copolymer

The mass-average molecular weight (Mw) and the number-average molecular weight (Mn) of the macromonomer copolymer that is the (meth)acrylic copolymer (B) produced in Examples, Comparative Examples, and Reference Examples were measured using a gel permeation chromatography method (GPC). A solution prepared by dissolving 10 mg of the produced copolymer in 10 mL of tetrahydrofuran and filtering the solution through a 0.45 µm filter was used as a sample for GPC measurement. In the GPC measurement of the copolymer, a macromolecular measurement guard column (manufactured by Tosoh Corporation, product name: TSK-GUARD COLUMN SUPER H-H) and one ultra-macromolecular measurement column (manufactured by Tosoh Corporation, product name: TSK-GEL GMHHR-H) were connected in series to a high-performance liquid chromatography measurement apparatus (manufactured by Tosoh Corporation, model name: HLC-8320 type) and used.

A differential refractometer (RI) was used as a detector.

The measurement was performed under the following conditions.
Separation column temperature: 40°C
Mobile phase: tetrahydrofuran
Flow rate of mobile phase: 0.6 mL/min
Sample injection amount: 10 µL

Using several types of polymethyl methacrylates having known molecular weights (manufactured by Polymer Laboratories, peak molecular weight (Mp) 1560 to 19500000) as standard polymers, calibration curves were produced, and the mass-average molecular weight (Mw) and the number-average molecular weight (Mn), which were relative molecular weights calibrated with polymethyl methacrylate, were determined.

### Mass-Average Particle Size of Rubbery Graft Polymer (C) Having Crosslinked Structure

The mass-average particle size of the rubbery graft polymer (C) having a crosslinked structure was measured as follows. The produced latex was diluted with distilled water to prepare a diluted latex having a solid content concentration of about 3%, and 0.1 mL of the diluted latex was used as a sample and measured under the conditions of a flow rate of 1.4 mL/min, a pressure of about 2.76 MPa (about 4000 psi), and a temperature of 35°C using CHDF2000 type particle size distribution analyzer manufactured by Matec Instrument Companies, Inc. In the measurement, a capillary cartridge for particle separation and a carrier liquid were used, and the liquid property was made almost neutral.

Before the measurement, monodisperse polystyrene with a known particle size manufactured by Duke Scientific was used as a standard particle size substance, and the particle sizes at 12 points in total from 20 nm to 800 nm were measured to form a calibration curve.

### Production of Test Piece

A raw material of the resin composition was melt-kneaded using a screw-type twin-screw extruder (manufactured by Shibaura Machine Co., Ltd., model name: TEM-26SX) of 26 mmφ to produce a pellet-shaped resin composition (molding material). Using an injection molding machine (manufactured by Sumitomo Heavy Industries, Ltd., model name: SE100EV-A), the resulting resin composition was injection-molded at a cylinder temperature of 250°C and a mold temperature of 60°C to produce a plate-shaped molded body (width 50 mm, length 100 mm, thickness 3 mm) and a rod-shaped molded body (width 8 mm, length 80 mm, thickness 4 mm). These molded bodies were used as test pieces for evaluation. The condition of the test pieces was adjusted in accordance with JIS K6717-2.

### Evaluation of Transparency: Measurement of Haze Value

The haze (in %) was measured as an index of transparency of molded bodies produced in Examples, Comparative Examples, and Reference Examples. The haze (in %) was measured at room temperature of 23°C using a haze meter (manufactured by Nippon Denshoku Industries Co., Ltd., device name: NDH2000) in accordance with JIS K7316 using the plate-shaped molded body as a test piece.

### Evaluation of Rigidity: Bending Test

As an index of the rigidity of the molded bodies produced in Examples, Comparative Examples and Reference Examples, the flexural modulus (in MPa) was measured using the rod-shaped molded body as a test piece in accordance with JIS K7171 using a Tensilon universal tester (manufactured by Orientic Co., Ltd, product name: RTC-1250A). The flexural modulus was determined from a stress-strain curve obtained at a room temperature of 23°C and a test speed of 2 mm/min.

### Evaluation of Impact Resistance: Charpy Impact Test

As an index of the impact resistance of the molded bodies produced in Examples, Comparative Examples, and Reference Examples, the Charpy impact strength (in kJ/m²) was measured using the rod-shaped molded body as a test piece (with and without a notch) in accordance with JIS K7111 using a Charpy impact tester (manufactured by Toyo Seiki Seisaku-sho, Ltd., product name: DG-CP).

The notch was a V notch and r = 0.25 mm.

Five samples were tested for each using a 15 J hammer, and an average value was obtained.

The test temperature was 23°C.

Some of the notched test pieces were also measured at a test temperature of -30°C.

### Evaluation of Moldability: Melt Flow Rate

As an index of the melt moldability of resin compositions produced in Examples, Comparative Examples, and Reference Examples, the melt flow rate (MFR) (in g/10 min) was measured under conditions of a temperature of 230°C and a load of 37.3 N in accordance with JIS K7210 (Method A) using a melt indexer (manufactured by Technol Seven Co., Ltd., device name: L243). The heating time of the resin composition was set to 4 minutes, and the sample cutting time interval was set to 10 seconds to 120 seconds depending on the MFR value of the sample.

### Raw Material

The abbreviations of the compounds used in Examples, Comparative Examples, and Reference Examples are as follows.
MMA: methyl methacrylate (manufactured by Mitsubishi Chemical Corporation)
MA: methyl acrylate (manufactured by Mitsubishi Chemical Corporation)
BA: n-butyl acrylate (manufactured by Mitsubishi Chemical Corporation)
ST: styrene (manufactured by FUJIFILM Wako Pure Chemical Corporation)
AMA: allyl methacrylate (manufactured by Mitsubishi Chemical Corporation)
1,3BD: 1,3-butanediol dimethacrylate (manufactured by Mitsubishi Chemical Corporation)
TBHP: t-butyl hydroperoxide
CHP: cumene hydroperoxide
nOM: n-octyl mercaptan
SFS: sodium formaldehyde sulfoxylate dihydrate (Rongalit)
Dispersant (1): dispersant produced in Production Example 1
Chain transfer agent (1): chain transfer catalyst produced in Production Example 2
Polymerization initiator (1): 1,1,3,3-tetramethylbutyl peroxy-2-ethylhexanoate (manufactured by NOF Corporation, product name: Perocta O)
Polymerization initiator (2): 2,2'-azobis(2-methylbutyronitrile) (manufactured by FUJIFILM Wako Pure Chemical Corporation, product name: V-59)
Emulsifier (1): polyoxyethylene alkyl ether phosphate (manufactured by TOHO Chemical Industry Co., Ltd., product name: Phosphanol RS-610NA)
Acrypet (trade name) VH: product name, manufactured by Mitsubishi Chemical Corporation, a (meth)acrylic polymer containing 95 mass% or more of a methyl methacrylate unit, mass-average molecular weight: 100000, MFR = 2.0 g/10 min (230°C, 37.3 N)
Acrypet (trade name) VH5: product name, manufactured by Mitsubishi Chemical Corporation, a (meth)acrylic polymer containing 95 mass% or more of a methyl methacrylate unit, mass-average molecular weight: 80000, MFR = 5.5 g/10 min (230°C, 37.3 N)
Acrypet (trade name) MF: product name, manufactured by Mitsubishi Chemical Corporation, a (meth)acrylic polymer containing 80 mass% or more of a methyl methacrylate unit, mass-average molecular weight: 100000, MFR = 14 g/10 min (230°C, 37.3 N)
Metablen (trade name) P-530A: product name, manufactured by Mitsubishi Chemical Corporation, a linear (meth)acrylic polymer containing 50 mass% or more of a methyl methacrylate unit, mass-average molecular weight: 2000000 or more
Metablen (trade name) P-551A: product name, manufactured by Mitsubishi Chemical Corporation, a linear (meth)acrylic polymer containing 50 mass% or more of a methyl methacrylate unit, mass-average molecular weight: 1000000 or more

### Production Example 1: Synthesis of Dispersant (1)

A reaction apparatus equipped with a stirrer, a cooling tube, and a thermometer was charged with 61.6 parts of a 17 mass% aqueous potassium hydroxide solution, 19.1 parts of MMA, and 19.3 parts of deionized water. Next, the liquid in the reaction apparatus was stirred at room temperature, and after confirming an exothermic peak, the liquid was stirred for 4 hours. Thereafter, the reaction liquid in the reaction apparatus was cooled to room temperature to produce an aqueous potassium methacrylate solution.

Next, in a polymerization apparatus equipped with a stirrer, a cooling tube, and a thermometer, 900 parts of deionized water, 70 parts of a 42 mass% aqueous solution of sodium 2-sulfoethyl methacrylate (manufactured by Mitsubishi Chemical Corporation, product name: Acryester SEM-Na), 16 parts of the above-described aqueous potassium methacrylate solution, and 7 parts of MMA were put and stirred, and the temperature of the liquid in the reaction apparatus was raised to 50°C while the inside of the polymerization apparatus was purged with nitrogen. To the polymerization apparatus, 0.053 parts of V-50 (manufactured by FUJIFILM Wako Pure Chemical Corporation, 2,2'-azobis(2-methylpropionamidine) dihydrochloride, product name) was added as a polymerization initiator, and the temperature of the liquid in the reaction apparatus was raised to 60°C. After charging of the polymerization initiator, 1.4 parts of MMA were added in 5 portions in total (total amount of MMA: 7 parts) every 15 minutes. Thereafter, the liquid in the polymerization apparatus was held at 60°C for 6 hours while being stirred, and then cooled to room temperature to produce a dispersant (1), which was a transparent aqueous solution and had a solid content of 8 mass%.

### Production Example 2: Synthesis of Chain Transfer Agent (1)

In a synthesizing apparatus equipped with a stirrer, under a nitrogen atmosphere, 2.00 g (8.03 mmol) of cobalt (II) acetate tetrahydrate (Wako special grade chemical manufactured by FUJIFILM Wako Pure Chemical Corporation), 3.86 g (16.1 mmol) of diphenylglyoxime (EP Grade manufactured by Tokyo Chemical Industry Co., Ltd.), and 100 mL of diethyl ether deoxygenated in advance by nitrogen bubbling were combined, and the mixture was stirred at room temperature for 2 hours.

Subsequently, 20 mL of boron trifluoride diethyl ether complex (EP Grade manufactured by Tokyo Chemical Industry Co., Ltd.) was added thereto, and the mixture was further stirred for 6 hours. The resultant was filtered. The collected solid was washed with diethyl ether and dried at 100 MPa or less at 20°C for 12 hours to produce 5.02 g (7.93 mmol, yield: 99 mass%) of a chain transfer agent (1) as a reddish brown solid.

### Production Example 3: Synthesis of Macromonomer (b1)

In a polymerization apparatus equipped with a stirrer, a cooling tube, and a thermometer, 145 parts of deionized water, 0.1 parts of sodium sulfate (Na₂SO₄), and 0.26 parts by mass of the dispersant (1) (solid content: 8 mass%) produced in Production Example 1 were added and stirred to form a uniform aqueous solution. Next, 95 parts of MMA, 5.0 parts of MA, 0.0014 parts of the chain transfer agent (1) produced in Production Example 2, and 0.25 parts of the polymerization initiator (1) were added to produce an aqueous dispersion.

Next, the inside of the polymerization apparatus was sufficiently purged with nitrogen, and the aqueous dispersion was heated to 80°C and then held for 3 hours, and then heated to 90°C and held for 2 hours. Thereafter, the reaction liquid was cooled to 40°C to produce an aqueous suspension of the macromonomer. The aqueous suspension was filtered through a filter cloth, and the residue was washed with deionized water and dried at 40°C for 16 hours to produce a bead-like macromonomer (b1). The resulting macromonomer had a number-average molecular weight (Mn) of 21300 and a mass-average molecular weight (Mw) of 39100.

The Tg of the homopolymer of methyl methacrylate (MMA) is 105°C (POLYMER HANDBOOK FOURTH EDITION 2003), and the Tg of the homopolymer of methyl acrylate (MA) is 10°C (POLYMER HANDBOOK FOURTH EDITION 2003). The Tg of the macromonomer (b1) corresponding to the polymer (B1) was 99°C when calculated using the Fox equation.

### Production Example 4: (Meth)Acrylic Copolymer (B)

In a polymerization apparatus equipped with a stirrer, a cooling tube, and a thermometer, 60 parts of the macromonomer (b1) produced in Production Example 4, 150 parts of deionized water, 0.26 parts of the dispersant (1), and 0.3 parts of sodium sulfate were added and stirred to produce an aqueous suspension. Next, the temperature in the polymerization apparatus was raised to 70°C, and then 33.2 parts of BA and 6.8 parts of ST were slowly added. Thereafter, the macromonomer (b1) was dissolved in BA and ST by holding at 70°C for 1 hour while stirring to produce a dispersion. Subsequently, the inside of the polymerization apparatus was cooled to 40°C, and then 0.5 parts of the polymerization initiator (2) were added and stirred for 30 minutes for dissolution. Next, the inside of the polymerization apparatus was sufficiently purged with nitrogen, and the aqueous dispersion was heated to 82°C and then held for 4 hours, and then heated to 90°C and held for 1 hour. After cooling to 40°C or lower, the resultant was filtered with a filter cloth, and the residue was washed with deionized water. Thereafter, the residue was dried at 40°C for 12 hours using a hot air circulating dryer to produce a (meth)acrylic copolymer (B) as a bead-like macromonomer copolymer. The resulting (meth)acrylic copolymer (B) had a number-average molecular weight (Mn) of 75000 and a mass-average molecular weight (Mw) of 1300000.

The Tg of the homopolymer of styrene (ST) is 100°C (POLYMER HANDBOOK FOURTH EDITION 2003), and the Tg of the homopolymer of n-butyl acrylate (BA) is -54°C (POLYMER HANDBOOK FOURTH EDITION 2003). The Tg of the polymer (B2) contained in the (meth)acrylic copolymer (B) was -37.5°C when calculated using the Fox equation.

### Production Example 5: Synthesis of Rubbery Graft Polymer (C-1) Having Crosslinked Structure

A five-necked flask equipped with a stirrer, a reflux condenser, a nitrogen inlet, a monomer addition port, and a thermometer was charged with 168 parts of deionized water. Then, the inside of the system was heated to 80°C with stirring and mixing while being purged with nitrogen, and 4.0 × 10⁻⁵ parts of ferrous sulfate, 1.2 × 10⁻⁴ parts of disodium ethylenediamine tetraacetate, and 0.4 parts of sodium formaldehyde sulfoxylate dihydrate were placed in the flask. After 5 minutes, a mixture of 22.0 parts of MMA, 16.0 parts of BA, 2.0 parts of ST, 1.2 parts of 1,3BD, 0.15 parts of AMA, 0.07 parts of TBHP, and 1.44 parts of the emulsifier (1) as a composition for an inner layer was charged over 2 hours, and kept at 80°C for 1 hour to complete polymerization of the inner layer. The conversion rate (Unreacted monomer was measured by gas chromatography. The same applies hereinafter.) of the resulting latex was 99% or more, and the mass-average particle size of the polymer for the inner layer was 190 nm.

Subsequently, an aqueous solution produced by dissolving 0.2 parts of SFS in 3.0 parts of deionized water was added to the latex and held for 15 minutes, and then a mixture of 49.0 parts of BA, 11.0 parts of ST, 0.15 parts of 1,3BD, 1.0 parts of AMA, 0.17 parts of CHP, and 0.96 parts of the emulsifier (1) was added dropwise as a composition for an intermediate layer over 3 hours and held for 2 hours to complete polymerization of the intermediate layer. The conversion rate of the resulting latex was 99% or more, and the mass-average particle size of the polymer formed up to the intermediate layer was 260 nm.

Subsequently, an aqueous solution produced by dissolving 0.2 parts of SFS in 3.0 parts of deionized water was added to the latex and held for 15 minutes, and then a mixture of 57.0 parts of MMA, 3.0 parts of MA, 0.1 parts of TBHP, and 0.18 parts of nOM as a composition for a graft layer was added dropwise over 2 hours and held for 1 hour to complete polymerization of the graft layer. The conversion rate of the resulting final latex was 99% or more. The mass-average particle size of the polymer was 280 nm.

Subsequently, a stainless steel container was charged with 300 parts of a 1.3% calcium acetate aqueous solution as a recovery agent aqueous solution, the temperature was raised to 80°C under mixing and stirring, and 300 parts of the final latex were continuously added over 10 minutes. Thereafter, the temperature was raised to 92°C and held for 5 minutes. The mixture was cooled to room temperature, and filtered with a centrifugal dehydrator (1300 G, 3 min) while being washed with deionized water to produce a wet resin. Then, the resultant was dried at 75°C for 48 hours to produce a rubbery graft polymer (C-1) having a white powdery crosslinked structure.

### Production Example 6: Synthesis of Rubbery Graft Polymer (C-2) Having Crosslinked Structure

Two parts of tetraethoxysilane, 2 parts of γ-methacryloyloxypropyldimethoxymethylsilane, and 96 parts of octamethylcyclotetrasiloxane were mixed to produce 100 parts of a siloxane-based mixture. To this, 150 parts of distilled water in which 1.00 parts of sodium dodecylbenzenesulfonate were dissolved were added, and the mixture was stirred with a homomixer at 10000 rpm for 5 minutes, and then passed through a homogenizer twice at a pressure of 20 MPa to produce a stable premixed organosiloxane emulsion.

Subsequently, the emulsion was put into a separable flask equipped with a cooling condenser, and then a mixture of 0.20 parts of sulfuric acid and 49.8 parts of distilled water was put into the separable flask over 3 minutes. Subsequently, the temperature was maintained in a state of being heated to 80°C for 7 hours and then cooled, and then the resulting reaction product was held at room temperature for 6 hours and then neutralized with a caustic soda aqueous solution to produce a polyorganosiloxane latex.

The polyorganosiloxane latex produced above in an amount of 33.56 parts (10.0 parts in terms of polymer) was collected in a separable flask, and 200 parts of distilled water was added and mixed, and then a mixture of 58.8 parts of butyl acrylate, 1.2 parts of allyl methacrylate, and 0.3 parts of t-butyl hydroperoxide was added.

The atmosphere in the flask was purged with nitrogen by passing a nitrogen stream through the separable flask, and the temperature was raised to 50°C. When the liquid temperature reached 50°C, an aqueous solution produced by dissolving 0.001 parts of ferrous sulfate, 0.003 parts of disodium ethylenediaminetetraacetate, and 0.24 parts of Rongalit in 10 parts of distilled water was added to initiate radical polymerization. To complete the polymerization of the acrylate component, this state was maintained for 1 hour, whereby a latex of composite rubber of polyorganosiloxane rubber and butyl acrylate was produced.

After the liquid temperature of the latex decreased to 65°C, a mixed liquid of 28 parts of methyl methacrylate, 2 parts of butyl acrylate, and 0.20 parts of t-butyl hydroperoxide was added dropwise over 1 hour to perform polymerization. After completion of the dropwise addition, a state of a temperature of 60°C or higher was maintained for 1 hour and then cooled, whereby a latex of a rubbery graft polymer in which a methyl methacrylate-ethyl acrylate copolymer was graft-polymerized with a composite rubber composed of polydimethylsiloxane and polybutyl acrylate was produced.

Subsequently, 500 parts of an aqueous solution in which calcium acetate was dissolved at a proportion of 1 mass% were heated to 60°C and stirred, and 340 parts of the latex of the rubbery graft polymer were gradually added dropwise thereinto and solidified. Then, a powdery rubbery graft polymer was produced. Water was added to 100 parts of the resulting rubbery graft polymer, the resultant was then washed with a flask equipped with a stirrer for 15 minutes, and the collected rubbery graft polymer was dried to produce a rubbery graft polymer (C-2) having a crosslinked structure in which the rubbery portion was a silicone-acrylic composite rubber.

### Examples, Comparative Examples, and Reference Examples of First Embodiment

### Example I-1

A pellet-shaped resin composition was produced using a twin-screw extruder (product name: TEM-26SX, 26 mmφ, L/D ≈ 48) manufactured by Shibaura Machine Co., Ltd. A pellet-shaped resin composition was produced by using 52.5 parts of Acrypet VH as the (meth)acrylic polymer (A), 37.5 parts of the macromonomer copolymer produced in Production Example 4 as the (meth)acrylic copolymer (B), and 10.0 parts of the rubbery graft polymer (C) having a crosslinked structure produced in Production Example 5 and melt-kneading the materials under the conditions of a cylinder temperature of 200 to 230°C and a die temperature of 230°C.

Then, a test piece for evaluation was produced using the resulting resin composition with an injection molding machine (manufactured by Sumitomo Heavy Industries, Ltd., model name: SE100EV-A) under the conditions of a cylinder temperature of 250°C and a mold temperature of 60°C.

A bending test and a Charpy impact test were performed using the resulting injection-molded piece. The melt flow rate was measured using the pellet-shaped resin composition that had been dried.

The resin composition and the evaluation results of the resulting test piece are shown in Table 1.

### [Examples I-2 to I-5, Comparative Examples I-1 to I-5, Reference Example I-1]

Pellet-shaped resin compositions having the resin compositions shown in Table 1 were produced, and test pieces were produced by injection molding and evaluated in the same procedure as in Example I-1. The resin composition and the evaluation results of the resulting test piece are shown in Table 1.

**[Table 1]**

| | | | | Examples | | | | | Reference Example | Comparative Example | | | | |
|---|---|---|---|---|---|---|---|---|---|---|---|---|---|---|
| | | | | I-1 | I-2 | I-3 | I-4 | I-5 | I-1 | I-1 | I-2 | I-3 | I-4 | I-5 |
| Makeup of resin composition | (Meth)Acrylic polymer (A) | VH | parts by mass | 52.5 | 42.5 | 57.0 | 42.5 | - | - | 40.0 | 30.0 | 76.0 | 60.0 | 76.0 |
| | | VH5 | parts by mass | - | - | - | - | 42.5 | 42.5 | - | - | - | - | - |
| | (Meth)Acrylic copolymer (B) | Production Example 4 | parts by mass | 37.5 | 37.5 | 28.0 | 37.5 | 37.5 | 37.5 | 60.0 | 70.0 | - | - | - |
| | Rubbery graft polymer (C) having | Production Example 5 (C-1) | parts by mass | 10.0 | 20.0 | 15.0 | - | 20.0 | 20.0 | - | - | 24.0 | 40.0 | - |
| | crosslinked structure | Production Example 6 (C-2) | parts by mass | - | - | - | 20.0 | - | - | - | - | - | - | 24.0 |
| | (Meth)Acrylic polymer (D) | P-530A | parts by mass | - | - | - | - | 2.0 | - | - | - | - | - | - |
| | Stiffness | Flexural modulus | MPa | 2100 | 1800 | 2100 | 1600 | 1800 | 1800 | 2000 | 1700 | 2400 | 1800 | 2000 |
| | Impact Resistance | Charpy impact test value (with notch, 23°C) | kJ/m² | 1.9 | 4.4 | 1.9 | 5.0 | 3.9 | 3.8 | 1.3 | 1.3 | 2.9 | 4.6 | 5.0 |
| Evaluation results | | Charpy impact test value (with notch, -30°C) | kJ/m² | - | 1.2 | - | 2.6 | - | - | - | - | 1.3 | - | 2.8 |
| | Moldability | Melt flow rate (230°C, 37.3 N) | g/10 min | 2.7 | 2.0 | 1.9 | 2.1 | 3.3 | 3.4 | 4.8 | 6.0 | 1.3 | 0.9 | 1.2 |
| | Haze value (3 mm plate) | | % | - | - | - | - | 2.6 | 4.2 | - | - | - | - | - |

The following can be seen from Table 1.

Comparison of Examples I-1 to I-5 with Comparative Examples I-1 and I-2 shows that Example I-1 to Example I-5 had favorable values of Charpy impact test with notch because of the effect of the rubbery graft polymer (C) having a crosslinked structure, and had improved toughness and impact resistance.

Comparison of Examples I-1 to I-5 with Comparative Examples I-3 to I-4 shows that Examples I-1 to I-5 have large values of the melt flow rate because of the effect of the (meth)acrylic copolymer (B), and have favorable moldability.

Example I-4 has a favorable value of Charpy impact test with notch at - 30°C because of the effect of the rubbery graft polymer (C-2) having a crosslinked structure in which the rubbery portion is a silicone-acrylic composite rubber, and has improved toughness and impact resistance at low temperature.

Comparative Example I-5 does not contain the (meth)acrylic copolymer (B), has a low melt flow rate, and is inferior in moldability.

Example I-5 further contains the (meth)acrylic polymer (D), and it turns out that the haze value is decreased, and thus the transparency and the surface appearance can be improved as compared with Reference Example I-1.

In this manner, in Examples I-1 to I-5, both high toughness and impact resistance and favorable moldability are achieved.

### Examples, Comparative Examples, and Reference Examples of Second Embodiment

### Example II-1

A pellet-shaped resin composition was produced using a twin-screw extruder (product name: TEM-26SX, 26 mmφ, L/D ≈ 48) manufactured by Shibaura Machine Co., Ltd. A pellet-shaped resin composition was produced by using 42.5 parts of Acrypet VH5 as the (meth)acrylic polymer (A), 37.5 parts of the macromonomer copolymer produced in Production Example 4 as the (meth)acrylic copolymer (B), 20.0 parts of the rubbery graft polymer (C-1) having a crosslinked structure obtained in Production Example 5, and 3.0 parts of Metablen P-551A as the (meth)acrylic polymer (D), and melt-kneading the materials under the conditions of a cylinder temperature of 200 to 230°C and a die temperature of 230°C.

Then, a test piece for evaluation was produced using the resulting resin composition with an injection molding machine (manufactured by Sumitomo Heavy Industries, Ltd., model name: SE100EV-A) under the conditions of a cylinder temperature of 250°C and a mold temperature of 60°C.

Haze value measurement, a bending test, and a Charpy impact test were performed using the resulting injection-molded piece. The melt flow rate was measured using the pellet-shaped resin composition that had been dried.

The resin compositions and the evaluation results of the resulting test piece are shown in Table 2.

### Examples II-2 to II-6, Comparative Examples II-1 to II-3, Reference Example II-1

Pellet-shaped resin compositions having the resin compositions shown in Table 2 were produced, and test pieces were produced by injection molding and evaluated in the same procedure as in Example II-1. The resin compositions and the evaluation results of the resulting test piece are shown in Table 2.

**[Table 2]**

| | | | | Examples | | | | | | Reference Example | Comparative Example | | |
|---|---|---|---|---|---|---|---|---|---|---|---|---|---|
| | | | | II-1 | II-2 | II-3 | II-4 | II-5 | II-6 | II-1 | II-1 | II-2 | II-3 |
| Makeup of resin composition | (Meth)Acrylic polymer (A) | VH5 | parts by mass | 42.5 | 42.5 | 42.5 | 37.0 | 32.5 | - | 42.5 | 68.0 | - | 100.0 |
| | | VH | parts by mass | - | - | - | - | - | 50.0 | - | - | 50.0 | - |
| | (Meth)Acrylic polymer (A2) | MF | parts by mass | - | - | - | 5.5 | 10.0 | - | - | 8.0 | - | - |
| | (Meth)Acrylic copolymer (B) | Production Example 4 | parts by mass | 37.5 | 37.5 | 37.5 | 37.5 | 37.5 | 50.0 | 37.5 | - | 50.0 | - |
| | Rubbery graft polymer (C) having crosslinked structure | Production Example 5 (C-1) | parts by mass | 20.0 | 20.0 | 20.0 | 20.0 | 20.0 | - | 20.0 | 24.0 | - | - |
| | (Meth)Acrylic polymer (D) | P-551A | parts by mass | 3.0 | - | - | - | - | 2.0 | - | 3.0 | - | - |
| | | P-530A | parts by mass | - | 1.0 | 2.0 | 2.0 | 2.0 | - | - | - | - | - |
| Evaluation results | Haze value (3 mm plate) | | % | 2.9 | 2.7 | 2.6 | 2.5 | 2.3 | 1.4 | 4.2 | 1.8 | 1.8 | 0.4 |
| | Flexural modulus | | MPa | 1700 | 1800 | 1800 | 1700 | 1700 | 2300 | 1800 | 2400 | 2300 | 3300 |
| | Charpy impact test value (with notch, 23°C) | | kJ/m² | 3.4 | 3.4 | 3.9 | 3.0 | 3.1 | 1.3 | 3.8 | 2.6 | 1.3 | 1.4 |
| | Charpy impact test value (without notch, 23°C) | | kJ/m² | 81 | 71 | 66 | 86 | 104 | 33 | 74 | 43 | 33 | 20 |
| | Melt flow rate (230°C, 37.3 N) | | g/10 min | 2.9 | 3.5 | 3.3 | 3.5 | 3.6 | 4.4 | 3.4 | 3.0 | 5.2 | 2.0 |

The following can be seen from Table 2.

Comparison of Example II-6 with Comparative Example II-2 shows that when the (meth)acrylic polymer (D) is added to the resin composition containing the (meth)acrylic polymer (A) and the (meth)acrylic copolymer (B), the haze value is decreased, and thus transparency and surface appearance can be improved. Comparison of Example II-6 and Comparative Example II-2 with Comparative Example II-3 shows that the effect of the (meth)acrylic copolymer (B) gives a low flexural modulus, flexibility and impact resistance, a large melt flow rate value, and excellent moldability.

In Examples II-1 to II-5, further excellent flexibility and impact resistance are imparted by containing the rubbery graft polymer (C) having a crosslinked structure in addition to the (meth)acrylic copolymer (B). Comparison of Examples II-1 to II-5 with Comparative Example II-1 shows that the effect of the (meth)acrylic copolymer (B) gives a low flexural modulus, flexibility and impact resistance, a large melt flow rate, and excellent moldability.

Comparison of Example II-1 with Examples II-2 and II-3 shows that the effect of suppressing haze is higher with P530A than with P551A. As compared with Example II-3, in Example II-4 and Example II-5 in which MF was used as the (meth)acrylic polymer (A2), haze can be further suppressed, and moldability can also be improved.

Examples II-1 to II-6 contain the (meth)acrylic polymer (D), and thus the haze is suppressed to be low as compared with Reference Example II-1, and have excellent transparency and a favorable appearance quality. Reference Example II-1 does not contain the (meth)acrylic polymer (D), and thus has insufficient transparency, but is excellent in impact resistance and moldability.

Comparative Example II-3 in which only the (meth)acrylic polymer (A) is used has excellent transparency, but has a high flexural modulus, poor flexibility, and poor impact resistance.

### Industrial Applicability

The resin composition of the first embodiment, containing the (meth)acrylic polymer (A), the specific (meth)acrylic copolymer (B), and the rubbery graft polymer (C) having a crosslinked structure as constituent components, is excellent in toughness, impact resistance, and moldability.

Since the molding material and the molded body of the first embodiment are formed by molding the resin composition, they are excellent in toughness, impact resistance, and moldability.

The resin composition of the second embodiment, containing the (meth)acrylic polymer (A), the specific (meth)acrylic copolymer (B), and specific (meth)acrylic polymer (D) as constituent components, is excellent in flexibility, moldability, and transparency.

Since the molding material and the molded body of the second embodiment are formed by molding the resin composition, they can be excellent in flexibility, impact resistance, and transparency and exhibit a favorable appearance quality.

Although the present embodiment has been described in detail with reference to specific embodiments, it will be apparent to those skilled in the art that various modifications can be made without departing from the spirit and scope of the present embodiment.

The present application is based on JP 2023-101504 filed on June 21, 2023 and JP 2023-101505 filed on June 21, 2023, which are incorporated by reference in their entirety.

## Claims

1. A resin composition comprising:
a (meth)acrylic polymer (A);
a (meth)acrylic copolymer (B); and
a rubbery graft polymer (C) having a crosslinked structure,
wherein
the (meth)acrylic polymer (A) is a random copolymer and/or a homopolymer,
the (meth)acrylic polymer (A) contains 50 mass% or more of a repeating unit derived from methyl methacrylate,
the (meth)acrylic copolymer (B) is a block copolymer and/or a graft copolymer containing a polymer (B 1) and a polymer (B2),
the polymer (B1) contains 50 mass% or more of a repeating unit derived from methyl methacrylate and has a glass transition temperature of 0°C or higher, and
the polymer (B2) is a polymer having a glass transition temperature of lower than 0°C.

2. The resin composition according to claim 1, wherein the resin composition contains 25 mass% or more of the (meth)acrylic copolymer (B) with respect to a total of 100 mass% of the resin composition.

3. The resin composition according to claim 1 or 2, wherein the (meth)acrylic copolymer (B) has a mass-average molecular weight calibrated with polymethyl methacrylate of 300000 or more.

4. The resin composition according to any one of claims 1 to 3, wherein the rubbery graft polymer (C) is a particulate rubber containing a core composed of a rubbery portion and a shell component, and the rubbery portion is a silicone-acrylic composite rubber.

5. The resin composition according to any one of claims 1 to 4, further comprising a (meth)acrylic polymer (D) that is a random copolymer and/or a homopolymer,
wherein
the (meth)acrylic polymer (A) contains 50 mass% or more of a repeating unit derived from methyl methacrylate and has a mass-average molecular weight of 50000 to 200000,
the (meth)acrylic polymer (D) contains 50 mass% or more of a repeating unit derived from methyl methacrylate and has a mass-average molecular weight of 500000 or more, and
the resin composition contains 0.2 to 15 mass% of the (meth)acrylic polymer (D) with respect to a total of 100 mass% of the resin composition.

6. A resin composition comprising:
a (meth)acrylic polymer (A);
a (meth)acrylic copolymer (B); and
a (meth)acrylic polymer (D),
wherein
the (meth)acrylic polymer (A) and the (meth)acrylic polymer (D) are random copolymers and/or homopolymers,
the (meth)acrylic polymer (A) contains 50 mass% or more of a repeating unit derived from methyl methacrylate and has a mass-average molecular weight of 50000 to 200000,
the (meth)acrylic copolymer (B) is a block copolymer and/or a graft copolymer,
the (meth)acrylic polymer (D) contains 50 mass% or more of a repeating unit derived from methyl methacrylate and has a mass-average molecular weight of 500000 or more, and
the resin composition contains 0.2 to 15 mass% of the (meth)acrylic polymer (D) with respect to a total of 100 mass% of the resin composition.

7. The resin composition according to claim 6, wherein
the (meth)acrylic polymer (A) contains a (meth)acrylic polymer (A2) having a melt flow rate of 7.0 g/10 min or more as measured under conditions of 230°C and 37.3 N in accordance with JIS K7210 or ISO 1133, and
the resin composition contains 3 to 15 mass% of the (meth)acrylic polymer (A2) with respect to a total of 100 mass% of the resin composition.

8. The resin composition according to claim 6 or 7, wherein the (meth)acrylic copolymer (B) contains a polymer (B1) containing 50 mass% or more of a repeating unit derived from methyl methacrylate.

9. The resin composition according to any one of claims 6 to 8, further comprising a rubbery graft polymer (C) having a crosslinked structure.

10. The resin composition according to any one of claims 1 to 9, wherein the (meth)acrylic copolymer (B) contains a constituent unit derived from a macromonomer (b1) represented by General Formula (1): 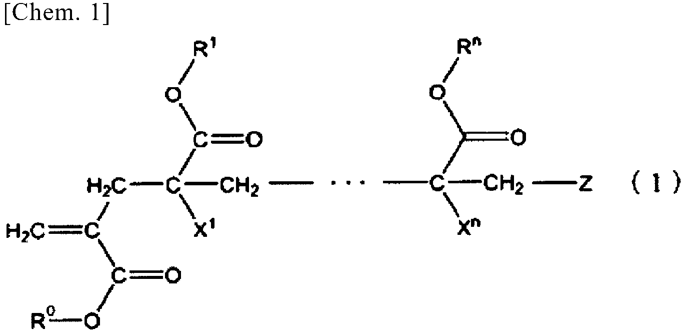 wherein
R⁰ to Rⁿ are each independently a hydrogen atom, an alkyl group, a cycloalkyl group, an aryl group, or a heterocyclic group; X¹ to Xⁿ are each independently a hydrogen atom or a methyl group; Z is a terminal group; and n is a natural number of 1 to 10000.

11. A molding material comprising the resin composition described in any one of claims 1 to 10.

12. The molding material according to claim 11, being a molding material for injection molding.

13. A molded body using the molding material described in claim 11 or 12.

14. A vehicle component comprising the molded body described in claim 13.

15. A vehicle exterior component comprising the molded body described in claim 13.

16. A home installation member comprising the molded body described in claim 13.

17. An optical member comprising the molded body described in claim 13.

18. A medical member comprising the molded body described in claim 13.

19. A container comprising the molded body described in claim 13.

20. The molding material according to claim 11, being a molding material for extrusion molding.

21. A molded body comprising the molding material described in claim 11 or 20.

22. A film comprising the molded body described in claim 21.

23. An optical film comprising the molded body described in claim 21.

24. An image display device comprising the molded body described in claim 21.

25. A film for a home installation, the film comprising the molded body described in claim 21.

26. A vehicle component comprising the molded body described in claim 21.

27. A vehicle exterior component comprising the molded body described in claim 21.
